# EUROPÄISCHE PATENTSCHRIFT

(11) **EP 2 840 087 B1**
(45) Veröffentlichungstag und Bekanntmachung des Hinweises auf die Patenterteilung: **10.04.2019**
(21) Anmeldenummer: 14179788.6
(22) Anmeldetag: 05.08.2014
(51) Int. Cl.: C07F 7/21, C08G 77/388, C09J 183/00, C07F 7/10, C09D 183/08, C08G 77/08, C08G 77/26, C09J 183/08

(54) **VERWENDUNG VON GUANIDINGRUPPEN AUFWEISENDEN SEMI-ORGANISCHEN SILICIUMGRUPPEN ENTHALTENDEN VERBINDUNGEN ZUR HÄRTUNG VON ALKOXYSILYLGRUPPENHALTIGEN VERBINDUNGEN**
USE OF COMPOUNDS CONTAINING SEMI-ORGANIC SILICON GROUPS WITH GUANIDINE GROUPS FOR CURING OF COMPOUNDS CONTAINING ALKOXYSILYL GROUPS
UTILISATION DE COMPOSÉS CONTENANT DES GROUPES DE SILICIUM SEMI-ORGANIQUES PRÉSENTANT DES GROUPES DE GUANIDINE POUR LE DURCISSEMENT DE COMPOSÉS CONTENANT DES GROUPES ALCOXYSILYLE

(30) Priorität: 23.08.2013 DE 102013216787
(43) Veröffentlichungstag der Anmeldung: 25.02.2015
(73) Patentinhaber: Evonik Degussa GmbH, 45128 Essen (DE)
(72) Erfinder: Knott, Wilfried, 45355 Essen (DE); Ferenz, Michael, 45147 Essen (DE); Fiedel, Michael, 45131 Essen (DE); Hojak, Wolfgang, 45276 Essen (DE); Brugger, Bastian Matthias, 46049 Oberhausen (DE); Schubert, Frank, 47506 Neukirchen-Vluyn (DE); Lewin, Anke, 40215 Düsseldorf (DE)
(74) Vertreter: Evonik Patent Association

(56) Entgegenhaltungen:
- EP-A1- 2 388 297
- EP-A1- 2 557 107
- EP-A2- 0 459 300
- EP-A2- 2 444 447
- EP-B1- 1 844 106
- WO-A1-2011/014273
- WO-A1-2011/095261
- JP-A- 2002 167 437
- US-A- 4 248 992
- US-A- 4 248 993
- G. G. Freeman: "Silicones", 1962, The Plastics Institute pages 22-23,

## Beschreibung

Verwendung von Guanidingruppen aufweisenden semi-organische Siliciumgruppen enthaltenden Verbindungen zur Härtung von Alkoxysilylgruppen haltigen Verbindungen.

Unter "semi-organische Siliciumgruppen enthaltenden Verbindungen" wird im Umfang der Erfindung verstanden, dass die genannten Verbindungen mindestens eine Siloxan Einheit aufweisen,damit also mindestens eine Si-O-Si - Einheit aufweisen. Bevorzugt weisen die genannten semi-organische Siliciumgruppen enthaltenden Verbindungen ein Siloxangerüst auf, welches folglich mehrere alternierende Silicium- und Sauerstoffatome aufweist. Zur definitorischen Einordnung derartiger Verbindungen als semi-organische Verbindungen wird auf das Kapitel "Silicone" des Römpp-Lexikons, Thieme-Verlag, Autorin J. H. Schreier und auf W. Noll - "Chemie und Technologie der Silicone" 2. Auflage, Verlag Chemie GmbH, Weinheim, 1968, S. 2 ff, verwiesen, die hierzu ausführen, dass die Silicone eine Mittel- oder Zwischenstellung zwischen anorganischen und organischen Verbindungen, insbesondere zwischen Silicaten und organischen Polymeren einnehmen.

Zur Aushärtung von Alkoxysilylgruppen tragenden Mono-, Oligo- oder Polymeren sind grundsätzlich all diejenigen Katalysatoren geeignet, die sowohl die Hydrolyse der Alkoxyfunktion und/oder die Kondensation der daraus gebildeten Silanole fördern. Sehr frühe Beschreibungen geeigneter Verbindungen finden sich in W. Noll - "Chemie und Technologie der Silicone", 2.Auflage, Verlag Chemie GmbH, Weinheim, 1968, S. 162 ff.

Trialkoxysilylgruppen tragende Polymere lassen sich durch verschiedene Reaktionen herstellen, so sind nicht nur Alkoxysilylgruppen tragende Polyurethane, Polyester, Polyether, Polyacrylate oder dergleichen, sondern auch andere Kautschuke bzw. weitere Polymere bekannt. Weiterhin sind Polymere bekannt, die die aus der Hydrolyse von Alkoxyfunktionen gewinnbaren Silanole (R1 R2R3-Si-OH) tragen. Solche Verbindungen können wiederum silanbasierend oder auch mit ausgeprägtem anorganischen Polymercharakter, wie z.B. wie bei den Poly(dimethyl)siloxan-olen (PDM Siloxanen) sein.

Wie dem Fachmann bekannt ist, erfährt die Hydrolyse- und Kondensationsreaktion von Trialkoxysilylfunktionen ein Reaktionsmaximum im stark sauren, wie auch im stark alkalischen pH-Bereich. Jedoch sind neben den starken (Lewis-) Säuren und Basen auch andere (Metall-)verbindungen als die Hydrolyse-/Kondensation fördernd bekannt, deren genauer katalytischer Mechanismus ist jedoch bis dato nicht hinreichend geklärt.

WO 2009/106720 (US 2011/040033) offenbart Metallsulfonate und Metallfluoralkylsulfonate als Polykondensationskatalysatoren, die Organopolysiloxan Zusammensetzungen zu Siloxan-Elastomeren härten. Derartige Katalysatoren haben den großen Nachteil, dass sie neben einer beschränkten Verfügbarkeit und eines hohen Preises nicht in Gegenwart basischer Komponenten wie Aminen oder basischen Füllstoffen (z.B. Kreiden) verwendet werden können. Letztere kommen gerade in Formulierungen im Bereich der Kleb- und Dichtstoffe zum Einsatz.

Gleiches gilt für stark lewissaure Katalysatoren wie z.B. Borhalogenide, Metallhalogenide wie AlCl₃, TiCl₄, ZrCl₄, SnCl₄, FeCl₂ FeCl₃ ZnCl₂ bzw. deren Aminkomplexe, welche in EP 2119745 (US 2010/152373) beansprucht werden und deren toxikologisches Profil ebenfalls bedenklich erscheint.

Toxikologisch unbedenklichere Katalysatorzubereitungen wie z.B. Metallcarboxylate in Kombination mit Aminverbindungen wie sie z. B. in EP 1445287 (US7115695) beschrieben sind, zeigen eine unzureichende Härtungsgeschwindigkeit der Bindemittelmatrix von bis zu 5 Tagen. Derartig lange Härtungszeiten sind in der Regel für den Großteil der Applikationen nicht akzeptabel.

Erfolgversprechend schien die Verwendung von Härtungskatalysatoren auf Basis von Titanaten bzw. Titankomplexen, welche jedoch starke Gelbfärbungen der Härtungsmassen aufwiesen und im Weiteren auch teilweise Inkompatibilitäten mit anderen in der Härtungsmasse vorhandenen Aminkomponenten zeigten.

Gute Härtungsergebnisse ohne die beschriebenen unerwünschten Nebeneffekte zeigen Organozinnverbindungen. Diese sind dem Fachmann aus dem Stand der Technik (Alwyn Davis - "Organotin compounds in technology and industry", Journal of Chemical Research, 4, 2010, S. 186, ISBN 0308-2342 bzw. Alwyn G. Davies "Organotin Chemistry", 2004, Wiley-VCH, ISBN 3-527-31023-1, S.383) hinreichend bekannt, werden jedoch toxikologisch zunehmend kritischer bewertet. Der Einsatz von Organozinnverbindungen ist daher sehr umstritten, gerade auch weil diesem durch die Änderung der EU Richtlinie 76/769 EWG vom 28.05.2009 Einschränkungen auferlegt wurden. Beispiele für die Verwendung von Organozinnverbindungen finden sich u.a. in DE 103 19 303 und DE 10 2006 060 357, in denen man sich zur Aushärtung von Poly(dimethylsiloxan)-Verbindungen (PDM-Verbindungen) der Katalyse mittels Dibutyl- bzw. Dioctyl-zinnverbindungen bedient.

Es ist daher zu erwarten, dass auch Zinnsalze zukünftig toxikologisch kritischer bewertet werden. So sind grundsätzlich auch Zinncarboxylate als Härtungskatalysatoren einsetzbar, wie WO 0056817 (US 6703442) zeigt.

WO 2010/086299 (US2011288245) beschreibt mit Feuchtigkeit vernetzende Reaktionsmischungen, die Trialkoxysilylgruppentragende Polymere beinhalten und mittels Niob- und Tantalverbindungen ausgehärtet werden. Solche Katalysatoren sind als unwirtschaftlich anzusehen, da ihre Verfügbarkeit auf dem Weltmarkt limitiert und der Rohstoffpreis sehr hoch ist. Entsprechendes gilt für die Verwendung von Hafnium- bzw. Germaniumalkoxiden wie sie in JP 2004043738 respektive JP2006052353 beschrieben sind.

Katalysatoren, die die Aushärtung von Alkoxysilylgruppen fördern, sind dem Fachmann hinreichend bekannt. Nachfolgend seien exemplarisch genannt: Zinn-Verbindungen wie Zinndiacetat, Zinndioctoat, Dibutylzinndiacetylacetonat, Dibutylzinndilaurat, Zinn Tetraacetat, Dibutylzinndiacetat, Dibutylzinndioctoat, Dibutylzinndilaurat, Dibutylzinndioleat, Dimethoxydibutylzinn, Dimethylzinn, Dibutylzinnbenzylmaleat, Bis (triethoxysiloxy)dibutylzinn, Diphenylzinndiacetat, Titanverbindungen, wie Tetraethoxy-Titan, Tetra-n-propoxy-Titan, Tetra-i-propoxy-Titan, Tetra-n-butoxytitan, Tetra-i-butoxytitan, Tetrakis (2-ethylhexoxy) titan, Di-i-propoxybis (ethylacetoacetat) titan, dipropoxybis (acetylacetonat) titan, Di-i-propoxybis (acetylacetonat) titan, Dibutoxybis (acetylacetonat) titan, Tri-i-propoxyallyltitanacetat, Isopropoxy octylenglycol oder Bis (acetylacetonat) titanoxid, Metallo aliphatischen Verbindungen, wie Bleidiacetat, Blei-di-2-ethylhexanoat, Blei-dineodecanoat, Bleitetraacetat, Blei tetrapropionat, Zinkacetylacetonat, Zink-2-ethylcaproat, Zink-diacetat, Bis (2 -Ethylhexansäure) Zink, Zinkdineodecanoat, Zinkdiundecenoat, Zinkdimethacrylat, Tetrakis (2-Ethylhexansäure) zirkoniumdichlorid, Tetrakis (Methacrylsäure) zirkoniumdichlorid, Kobalt-diacetat. Des Weiteren können auch Bismutkatalysatoren, Eisen(II)- und Eisen(III)-Verbindungen, z.B. Eisen (III) acetylacetonat oder Eisen-diacetat, Aluminiumverbindungen, z.B. Aluminiumacetylacetonat, Calcium-verbindungen, z.B. Calciumethylendiamintetraacetat, Magnesiumverbindungen, z.B. Magnesiumethylendiamin-tetraacetat eingesetzt werden.

Auch Amine wie z.B. Triethylamin, Tributylamin, Aminopropyltrimethoxysilan, N-(2-Aminoethyl)-3-aminopropyltrimethoxysilan, Tetramethylguanidin oder 1,8-Diazabicyclo [5.4.0.]-7-undecen, 1,4-Diazabicyclo[2.2.2]octan, 1,5-Diazabicyclo-[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., bzw. deren Mineral-, Brönstedt-, Lewis- oder Carbonsäure-Salze, werden eingesetzt. Ebenfalls katalytisch aktiv sind Tetraalkylammoniumverbindungen, wie N,N,N-Trimethyl-N-2-hydroxypropylammonium-hydroxid, N,N,N-Trimethyl-N-2-hydroxypropylammonium-2-ethylhexanoat oder Cholin-2-ethylhexanoat. Auch organische oder anorganische Brönstedtsäuren wie Methansulfonsäure, p-Toluolsulfonsäure, Dodecylbenzolsulfonsäure, 1-Naphthalinsulfonsäure, Camphersulfonsäure, Essigsäure, Trifluoressigsäure oder Benzoylchlorid, Salzsäure, Phoshorsäure, deren Mono- und/oder Diester, wie z.B. Butylphosphat, (Iso-) Propylphosphat, Dibutylphosphat etc., sind als Katalysatoren geeignet. Auch anorganische und organische Brönstedtbasen wie z.B. Natriumhydroxid, Tetramethylammoniumhydroxid, Kaliumhydroxid, oder Tetrabutylammoniumhydroxid sind als Katalysatoren geeignet. Selbstverständlich können auch Kombinationen mehrerer Katalysatoren eingesetzt werden.

Auch sind sogenannte photolatente Basen als Härtungskatalysatoren bekannt, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen.

Auch katalytisch aktiv sind Katalysatoren, welche von der Firma Du Pont unter der Handelsbezeichnung Tyzor® vertrieben werden. Gleiches gilt für Katalysatoren des Typs Kenreact® (Kenrich), Borchi Kat® (Borchers) bzw. K-Cure® / Nacure® (King Industries).

WO 2010/117744 (US2012022210) offenbart den Einsatz von superbasischen Phosphazen-Katalysatoren zur Kondensation von PDM-OH Siloxanen. Diese zeigen jedoch ein ungünstiges toxikologisches Profil, sind unwirtschaftlich und sind daher in einer Vielzahl von Anwendungen nicht einsetzbar bzw. bedürfen einer aufwendigen Abtrennung bzw. Nachbehandlung.

Eine stark basische Stickstoffgruppierung, die sog. Guanidin-Funktion, kommt in der Natur häufig z.B. in Form der Aminosäure Arginin vor. Ein einfacher Zugang zu Guanidinstrukturen ist die Umsetzung von Stickstoffverbindungen wie Ammoniak, Aminen oder Aminderivaten mit Carbodiimiden, die das strukturelle Merkmal einer R-N=C=N-R Gruppierung enthalten. Solche Carbodiimide sind kommerziell gut erhältlich, z.B. in Form von Cyanamid, NN-Dicyclohexylcarbodiimid, Bis-isopropylcarbodiimid, N-(3-Dimethylaminopropyl)-N'-ethylcarbodiimid-hydrochloride, 1,3-Di-p-tolylcarbodiimid und anderen Carbodiimid-Derivaten.

Die Reaktionsvielfalt der Carbodiimide ist dem Fachmann bekannt und umfassend in der Literatur beschrieben, so auch die Reaktion mit Nucleophilen wie beispielweise sauerstoff- oder stickstoffhaltigen Gruppen. Solche Reaktionen finden sich z.B. in Frederick Kurzer, K. Douragh-Zader - "Advances in the Chemistry of Carbodiimides" (Chemical Reviews, Vol. 67, Nr. 2, 1967, S. 99 ff.) bzw. in Henri Ulrich -"Chemistry and Technology of Carbodiimides" (John Wiley & Sons Ltd., ISBN 978-0-470-06510-5, 2007).

Die Herstellung von Guanidinstrukturen ist durch die Umsetzung von Aminen und Carbodiimiden unter der Katalyse von Ytterbiumtrifluormethansulfonat (Yb(OTf)₃), welche im Falle der Umsetzung von primären Aminen zu einer selektiven 1,3-Wasserstoff-Wanderung führt, möglich. Es ist auch möglich die Reaktion mit Hilfe anderer Metalltriflate durchzuführen, wie Lanthan, Neodym, Samarium, Europium oder Erbium. Die von Qi Shen et al. beschriebene Reaktion lässt sich zudem bei sehr milden Reaktionsbedingungen zu hohen Produktausbeuten führen (J. Org. Chem. 2009, 74, 6347-6349), das zitierte Dokument ist vollumfänglich Bestandteil der vorliegenden Erfindung.

Guanidinstrukturen sind weiterhin zugänglich durch die Substitution von Halogenalkylgruppen tragenden Verbindungen mit Guanidinen wie z.B. dem Tetramethylguanidin. Eine derartige Substitution an einem Chlorpropylsilan ist z.B. in US 4248992 beschrieben.

Einen Zugang zu semi-organisch-polymeren Guanidinstrukturen offenbart EP 1 844 106 B (US 7,825,207). Mittels Ringöffnung von epoxyfunktionellen Siloxanen durch Aminogruppen tragende Guanidinverbindungen sind guanidinfunktionelle Siloxane erhältlich, die sich für den Einsatz in z.B. kosmetischen Formulierungen eignen.

EP 1985666 (US 2009/182091) beschreibt Amidine und EP 2123720 (US 2010/004367) Guanidine mit organischen Resten zur Aushärtung von endständig Silylgruppen tragenden Polyethern. Die hierbei verwendeten organischen, niedermolekularen Guanidinderivate zeigen trotz der organischen Modifikation, die zu einer besseren Verträglichkeit in der zu härtenden Polymermatrix führen sollte, eine unzureichende Härtungskinetik bzw. müssen in einem vorgelagerten Prozessschritt aufwendig gelöst bzw. dispergiert werden. Die so hergestellten Katalysatorzubereitungen sind zudem wegen ihres Dispersionscharakters schlecht einzuarbeiten, was deutliche anwendungstechnische Nachteile mit sich bringt. Die verwendeten Hilfsstoffe wie auch die Katalysatoren sind in den Endprodukten migrationsfähig, d.h. sie können an die Oberfläche diffundieren (sogenanntes "Ausschwitzen") und verändern diese nachteilig. Diese Veränderungen führen zum Beispiel zu einer Änderung des taktilen Empfindens, im Besonderen bei Dichtungsstoffen führen sie zur Bildung eines Oberflächenfilmes der seinerseits z.B. zu einer vermehrten Anschmutzung der gefüllten Dichtungsfuge führt.

Dem Fachmann ist allgemein bekannt, dass Oxypropylen-haltige Polyether mit Silanen und/oder Siloxanen nicht unbegrenzt mischbar sind. Daher ist davon auszugehen, dass eine Silylmodifikation an der katalytisch aktiven Guandinfunktion zu einer Verschlechterung der Kompatibilität in einem Polyether führt und damit zu einer verminderten Aushärtungsgeschwindigkeit. In Fortführung dieses Gedankens ist weiterhin zu erwarten, dass semi-organische Polydimethylsiloxanderivate mit Guanidinfunktionen diesen Nachteil ebenfalls aufweisen, oder gar diesen stärker ausprägen.

Da eine Silan- oder eine Siloxangruppe eine gute Kompatibilität mit Siloxanen aufweisen, ist es nicht verwunderlich, dass wie auch in EP 2182031 gezeigt, die Aushärtung von Alkoxysilylendgruppen tragenden Siloxanen mit Härtungskatalysatoren basierend auf Tetramethylguanidingruppen tragenden Silanen möglich ist.

US 4,248,993 offenbart die Verwendung von Guanidinylgruppen aufweisenden Siloxanen zur Härtung von Organopolysiloxanen und ein Verfahren zur Härtung von Siloxanen mit Guanidinylgruppen aufweisenden Siloxanen.

US 4,248,992 offenbart die Verwendung von Siloxanen als Mikrobizid.

WO 2011/014273 A1 offenbart die Verwendung von Guanidyl-substituierten Polysiloxanen als Kohlendioxid-Absorptionsmaterial.

EP 0459300 A2 offenbart die Verwendung von Alkoxysilanen in Dichtungsmassen.

WO 2011/095261 A1 offenbart die Verwendung von Aminoalkyl-funktionalisierten Alkoxysilanen in Kleb- und Dichtstoff-Zusammensetzungen.

EP 2388297 A1 offenbart Trialkoxysilyl-haltige Polymere und Zusammensetzungen diese enthaltend und die Verwendung solcher Zusammensetzungen und Amidin-Verbindungen in härtbaren Dicht- und Klebemassen.

G.G. Freeman: "Silicones", 1962, The Plastics Institute, Seiten 22-23, ist ein Lehrbuch über Siloxane, es lehrt die Anwendung der Formel "MDTM" zur Beschreibung von Siloxanen.

JP 2002 167437 A offenbart die Verwendung von Guanidinylgruppen-enthaltenden Siloxanen in Haar- und Faser-Behandlungsmitteln.

EP 2557107 A1 offenbart die Verwendung von Guanidinylgruppen-enthaltenden Siloxanen als Bestandteil von Wasch- und Reinigungsmitteln.

EP 2444447 A2 offenbart die Verwendung von Guanidinylgruppen-enthaltenden Siloxanen als Textil-, Wasch- und Reinigungszusatz.

Viele im Stand der Technik beschriebene Ansätze zur Katalyse von Alkoxysilylverbindungen zeichnen sich durch ungewünschte Eigenschaften aus und erschweren so eine breite Anwendbarkeit. So sind sie entweder unwirtschaftlich, zeigen unzureichende Härtungsgeschwindigkeiten, unerwünschte Migrationseffekte welche zu einem schlechten Oberflächenbild der Härtungsmassen führen, oder sind toxikologisch bedenklich.

Daher bestand ein Bedarf an Katalysatoren, die die zuvor beschriebenen Mängel nicht aufweisen.

Aufgabe der vorliegenden Erfindung ist es daher, schwermetallfreie bzw. gänzlich metallfreie Härtungskatalysatoren zu finden, die die Aushärtung von Alkoxysilylgruppen haltigen Verbindungen beschleunigen und zumindest einen der Nachteile des Standes der Technik zu überwinden.

### Beschreibung der Erfindung:

Überraschenderweise wurde gefunden, dass diese Aufgabe durch Guanidingruppen aufweisende semi-organische Siliciumgruppen enthaltende Verbindungen gelöst werden konnte.

Gegenstand der vorliegenden Erfindung ist daher die Verwendung Guanidingruppen aufweisender semi-organische Siliciumgruppen enthaltender Verbindungen, die nachfolgend beschrieben werden, gemäß den Maßgaben des Anspruches 1, zur Härtung von alkoxysilylgruppenhaltigen Verbindungen.

Ein Vorteil der Guanidingruppen aufweisenden semi-organische Siliciumgruppen enthaltenden Verbindungen oder Guanidingruppen aufweisenden Siloxane ist ihre hohe Lagerstabilität.

Ein Vorteil der erfindungsgemäßen Verwendung von Guanidingruppen aufweisenden semi-organische Siliciumgruppen enthaltenden Verbindungen als Härtungskatalysatoren ist, dass die mechanischen Eigenschaften der Produkte keine, bzw. nur eine geringe Abhängigkeit über einen weiten Konzentrationsbereich des Katalysators in der Zusammensetzung aufweisen.

Ein weiterer Vorteil der erfindungsgemäßen Verwendung ist eine hohe Produktsicherheit.

Ein weiterer Vorteil der erfindungsgemäßen Verwendung ist eine bessere toxikologische Verträglichkeit im Vergleich zu anderen im Stand der Technik bekannten Katalysatorsystemen.

Beschrieben werden hier auch Zusammensetzungen enthaltend Komponente (a) mindestens eine Guanidingruppen aufweisende semi-organische Siliciumgruppen enthaltende Verbindung und Komponente (b) mindestens eine Alkoxysilylgruppen haltige Verbindung.

Diese Zusammensetzungen haben den Vorteil, dass sie bei der Aushärtung von Alkoxysilylgruppen haltigen Verbindungen ein deutlich besseres Aushärtungsergebnis im Vergleich zu organisch modifizierten Guanidinderivaten, sowie weitere signifikante anwendungstechnische Vorteile aufweisen.

Ein weiterer Gegenstand der vorliegenden Erfindung ist ein Verfahren zur Härtung von Alkoxysilylgruppen haltigen Verbindungen, indem die Guanidingruppen aufweisenden semi-organische Siliciumgruppen enthaltenden Verbindungen zur Aushärtung der Alkoxysilylgruppen haltigen Polymeren unter Bildung von Si-O-Si-Bindungen führen, gemäß Anspruch 4.

Vorteilhaft ist das erfindungsgemäße Verfahren, weil zur Härtung keine Metallkatalysatoren zugesetzt werden.

Weiterhin vorteilhaft ist das Verfahren, weil die Härtung bei Raumtemperatur durchgeführt wird. Damit ist das Verfahren energieeffizienter.

Vorteilhaft ist das erfindungsgemäße Verfahren, weil zur Härtung keine toxikologisch bedenklichen Metallverbindungen zugesetzt werden.

Bevorzugte erfindungsgemäß einzusetzende Guanidingruppen aufweisende semi-organische Siliciumgruppen enthaltende Verbindungen sind dadurch gekennzeichnet, dass die semi-organische Siliciumgruppen enthaltenden Verbindungen Siloxane sind, wie in den Ansprüchen 1 bis 3 gekennzeichnet.

Bevorzugt sind die Guanidingruppen aufweisenden semi-organische Siliciumgruppen enthaltenden Verbindungen oder Guanidingruppen aufweisende Siloxane frei von Alkoxysilylgruppen. Damit erhöht sich die Lagerstabilität.

Erfindungsgemäß einzusetzende Guanidingruppen aufweisende semi-organische Siliciumgruppen enthaltende Verbindungen oder Guanidingruppen aufweisende Siloxane
sind die der Formel (I)

MₐM^{G}_{b}D_{c}D^{G}_{d}TₑQ_{f} (I)

a = größer 1 bis kleiner 3,
b = 0 bis 10, bevorzugt 0 bis 5, besonders bevorzugt größer 0 bis 4, insbesondere bevorzugt größer 1 bis kleiner 3,
c = 0 bis 350, bevorzugt 1 bis 150, mehr bevorzugt größer 1 bis 15, besonders bevorzugt 2 bis 10, insbesondere bevorzugt größer 2 bis 5,
d = 1 bis 4,
e = 0 bis 50, bevorzugt größer 0 bis 30, mehr bevorzugt 0 bis 10, besonders bevorzugt größer 1 bis 5, insbesondere bevorzugt 2 bis kleiner 4,
f = 0 bis 10, bevorzugt größer 0 bis 5, besonders bevorzugt 0 bis kleiner 5, insbesondere bevorzugt größer 1 bis kleiner 3,
wobei die Summe der Indices b und d gleich oder größer 1 bis 20, bevorzugt größer 1 bis 15, insbesondere bevorzugt 2 bis 10 ist,
unter der Maßgabe, dass für den Index a gleich 2 und gleichzeitig die Summe der Indices von b, c, e und f gleich null, dann der Index d ungleich 1 ist,
M = [R₃SiO_{1/2}],
M^{G} = [R^{G}R₂SiO_{1/2}],
D = [R₂SiO_{2/2}],
D^{G} = [R^{G}RSiO_{2/2}],
T = [RSiO_{3/2}],
Q = [SiO_{4/2}],

- R: sind unabhängig voneinander, gleich oder verschieden, lineare oder verzweigte, gesättigte wie auch ein oder mehrfach ungesättigte Kohlenwasserstoffreste, die durch Heteroatome unterbrochen sein können und/oder mit Hydroxy-, Amino-, Carboxy- oder Arylresten ein oder mehrfach substituiert sein können, bevorzugt mit Aminoresten substituiert,
bevorzugte Kohlenwasserstoffreste, die optional mit Hydroxy- und Aminoresten substituiert sein können, sind Polyether, Alkyl- oder Arylreste,
mehr bevorzugt Alkyl- oder Arylreste,
weiter mehr bevorzugt Alkylreste,
insbesondere Methyl- oder Propylreste,
wobei die Arylreste auch mit C₁-C₈-Alkylresten substituiert sein können
- R^{G}: ein Guanidingruppen haltiger Rest der Formel (IIa), (IIb) oder (IIc),deren Tautomere und/oder Salze

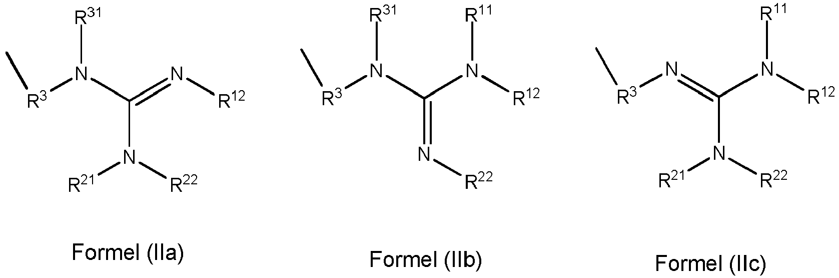

- R³: sind zweiwertige Reste, die unabhängig voneinander, gleiche oder verschiedene lineare oder verzweigte Kohlenwasserstoffreste enthaltend 1 bis 50 Kohlenstoffatome, bevorzugt 2 bis 20, besonders bevorzugt 3 bis 10, insbesondere bevorzugt mehr als 3 bis 8, die durch Heteroatome unterbrochen sein können, bevorzugte Heteroatome sind Sauerstoff, Stickstoff oder Schwefel und/oder mit Hydroxy- oder Aminoresten ein oder mehrfach substituiert sein können,
besonders bevorzugt ist der Kohlenwasserstoffrest ein Propylenrest;
- R¹¹, R¹², R²¹, R²², R³¹: sind unabhängig voneinander gleich oder verschieden Wasserstoff, lineare oder verzweigte oder cyclische Kohlenwasserstoffe enthaltend 1 bis 15 Kohlenstoffatome, bevorzugt mehr als 1 bis 10, insbesondere 2 bis 7, wobei die Kohlenwasserstoffe auch 1 oder 2 Heteroatome enthalten können, bevorzugte Heteroatome sind Stickstoff, Sauerstoff und Silizium.

In besonders bevorzugten Guanidingruppen aufweisenden Siloxanen der Formel (I) sind die Reste R¹¹, R¹², R²¹, R²² in R^{G} der Formel (IIc) alle Wasserstoff oder Methyl, mehr bevorzugt alle Methyl.

In weiterhin besonders bevorzugt einsetzbaren Guandingruppen aufweisenden Siloxanen der Formel (I) sind die Reste R¹² und R²² der Formel (IIc) identisch nur für den Fall, dass die Reste R¹¹ und R²¹ beide gleich Wasserstoff sind und R³¹ nicht vorhanden ist.

Bevorzugte Reste R¹¹, R¹², R²¹, R²² der Formel (IIc) sind Methyl, Ethyl, Propyl, Isopropyl, Butyl, tert. Butyl, Cyclohexyl, Phenyl, 4-Nitrophenyl, p-Tolyl, Trimethylsilyl, 2-Morpholinoethyl, 3-Dimethylaminopropyl oder Wasserstoff. Besonders bevorzugte Reste sind Ethyl, Isopropyl oder Cyclohexyl, insbesondere bevorzugt sind Methyl und Cyclohexyl.

Weiterhin bevorzugt sind die Reste R¹² und R²² der Formel (IIc) identisch.

Besonders bevorzugt sind die Reste R¹² und R²² der Formel (IIc) identisch und gleich Ethyl, Isopropyl oder Cyclohexyl, insbesondere bevorzugt sind die Reste R¹² und R²² identisch und gleich Cyclohexyl.

Die verschiedenen Fragmente der Verbindungen der Formel (I) können statistisch verteilt sein.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formeln (I) und (III).
Statistische Verteilungen können blockweise sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die erfindungsgemäßen Guanidin-Gruppen können als Tautomere vorliegen, welche z.B. durch die Formeln 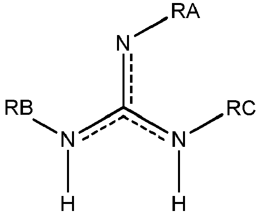 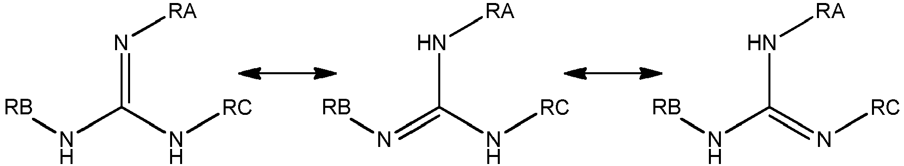 ausgedrückt werden können. Insbesondere sind alle mesomeren und tautomeren wie auch radikalische Spezies wie sie z.B. in "Organische Chemie: Grundlagen, Stoffklassen, Reaktionen, Konzepte, Molekülstruktur" (Eberhard Breitmaier, Günther Jung; Thieme Verlag, 2009, 6. Aufl., Kapitel 25.7.1) aufgeführt sind, eingeschlossen.

Vorzugsweise stellt in den obigen Strukturen einer der Reste RA, RB oder RC den Siloxangruppen aufweisenden Rest aus der Formel (I) dar.

Alle Doppelbindungen, auch wenn sie eine bevorzugte Konstitution wiedergeben, bedeuten sowohl E- als auch Z- Konfiguration, beziehungsweise bedeuten sowohl cisals auch trans- Konfiguration.

Die Guanidingruppen aufweisenden semi-organischen Siliciumgruppen enthaltenden Verbindungen können durch Zusatz von Säuren, z.B. Brönstedt oder Lewissäuren positiv geladen sein. Insbesondere können die Guanidingruppen positiv geladen sein. Der Zusatz von Säuren kann in Bezug auf die Anzahl der Guanidingruppen stöchiometrisch oder unterstöchiometrisch erfolgen. Im Falle der unterstöchiometrischen Dosierung sind nicht alle Guanidingruppen positiv geladen.

Bevorzugte Brönstedtsäuren sind Mineralsäuren oder Carbonsäuren. Geeignete Mineralsäuren sind Chlorwasserstoffsäure oder Salzsäure, Schwefelsäure, Phosphorsäure oder Salpetersäure. Bevorzugte Carbonsäuren sind aliphatische, gesättigte und ungesättigte Mono-, Di- und Tricarbonsäuren.

Bevorzugte Lewissäuren sind Verbindungen des Bors wie z.B. Borane.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die erfindungsgemäß einzusetzenden Guanidingruppen aufweisenden semi-organische Siliciumgruppen enthaltenden Verbindungen und die Guanidingruppen aufweisenden Siloxane können nach den aus dem Stand der Technik bekannten Methoden hergestellt werden.

Bevorzugt werden sie z.B. durch Substitution hergestellt. Dazu werden Halogenalkylgruppen aufweisende Siloxane mit Guanidinen umgesetzt. Vorteilhafterweise werden die Guanidine im Überschuss eingesetzt. Nicht umgesetzte Mengen an Guanidin werden am Ende der Umsetzung mit Hilfe thermischer Trennverfahren entfernt, ein bevorzugtes thermisches Trennverfahren ist die Destillation.

Weiterhin bevorzugt ist die Umsetzung von Aminoalkylgruppen aufweisenden Siloxanen mit Carbodiimiden wie z.B. Diethylcarbodiimid, Diisopropylcarbodiimid, Methylpropylcarbodiimid, Dicyclohexylcarbodiimid, Hexamethylenecarbodiimid, Heptamethylenecarbodiimid, 1-Ethyl-3-(3-dimethylaminopropyl)carbodiimid, 1-Cyclohexyl-3-(2-morpholinoethyl)carbodiimidmeso-p-toluolsulfonat, 1-tert-Butyl-3-(3-dimethylaminopropyl)carbodiimid, Diphenylcarbodiimid, 4,4'-Dinitrodiphenylcarbodiimid, di-p-Tolylcarbodiimid und bis(Trimethylsilyl)carbodiimid. Vorteilhafterweise werden die Carbodiimide in Mengen bis zur stöchiometrischen Equivalenz eingesetzt, bevorzugt beträgt das Verhältnis Carbodiimid zu Aminogruppen von 0,5 bis 1, besonders bevorzugt von 0,7 bis 0,95, insbesondere bevorzugt von 0,75 bis 0,85. Umsatzangaben beziehen sich in den Beispielen deshalb auf die in eventuellem Unterschuss eingesetzten Carbodiimide.

Verwendung der erfindungsgemäßen Guanidingruppen aufweisenden semi-organische Siliciumgruppen enthaltenden Verbindungen zur Härtung von alkoxysilylgruppenhaltigen Verbindungen.

Bevorzugt sind die alkoxysilylgruppenhaltigen Verbindungen solche, die Alkoxysilylgruppen haltige Polymere sind.

Mehr bevorzugt sind die alkoxysilylgruppenhaltigen Verbindungen oder Alkoxysilylgruppen haltigen Polymere die Polymere der Formel (III)

P(SiX_{w}Y_{(3-w)})ₚ (III)

wobei
- P: ein beliebiges Polymer sein kann,
bevorzugt ein Polymerrest ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Silikonharzen, Polyethern, Polyetherestern und/oder Polyethercarbonaten
- X: ist unabhängig voneinander gleich oder verschieden einem Alkoxyrest mit 1 bis 8 Kohlenstoffatomen, bevorzugt Ethoxy und/oder Methoxy,
- Y: ist unabhängig voneinander gleich oder verschieden ein Alkylrest, bevorzugt ein Alkylrest mit 1 bis 20 Kohlenstoffatomen, mehr bevorzugt größer 1 bis 10 Kohlenstoffatomen, insbesondere bevorzugt 2 bis 5 Kohlenstoffatome,
- w: ist unabhängig voneinander gleich oder verschieden ein Index von 1 bis 3, bevorzugt größer 1 bis zu 3, besonders bevorzugt größer 1 bis kleiner 3,
- p: gleich 1 bis 100 ist, bevorzugt größer 1 bis 50, mehr bevorzugt 2 bis 25, weiter mehr bevorzugt größer 2 bis 10.

Bevorzugte Akoxysilylgruppen haltige Polymere oder Polymere der Formel (III) sind Polyether.

Bevorzugte Alkoxysilylgruppen haltige Polymere der Formel (III) enthalten Oxypropyleneinheiten. Mehr bevorzugt enthalten die Polymere der Formel (III) mehr als 50 Gew.-% Oxypropyleneinheiten bezogen auf das Gesamtpolymermolekül, insbesondere mehr als 80 Gew.-%.

Bevorzugte Alkoxysilylgruppen haltige Polymere der Formel (III) enthalten neben Oxypropyleneinheiten weitere Heteroatome außer Sauerstoff, bevorzugt sind diese Heteroatome ausgewählt aus Stickstoff und Schwefel, insbesondere Stickstoff. Weiter mehr bevorzugte Polymere der Formel (III) weisen Stickstoff als Teil der funktionellen Gruppen ausgewählt aus Amingruppe, Amidgruppe, Thioamidgruppe, Carbamatgruppe, Thiocarbamatgruppe, Urethangruppe und Thiourethangruppe auf, wobei mehrere Stickstoffatome Teil unterschiedlicher funktioneller Gruppen sein können.

Bevorzugte Alkoxysilylgruppen haltige Polymere der Formel (III) weisen die Alkoxysilylgruppen kammständig oder/und terminal auf bezogen auf das Backbone des Polymers.

Mögliche Zusammensetzungen zeichnen sich dadurch aus, dass sie als Komponente (a) die erfindungsgemäß einsetzbaren Guanidingruppen aufweisenden semi-organische Siliciumgruppen aufweisenden Verbindungen enthalten, sowie als Komponente (b) mindestens eine alkoxysilylgruppenhaltige Verbindung.

Bevorzugt enthalten die Zusammensetzungen als Komponente (a) Guanidingruppen aufweisende Siloxane oder Silane, mehr bevorzugt Siloxane. Weiter mehr bevorzugt sind die Siloxane die der Formel (I) wie oben beschrieben.
Weiterhin bevorzugt enthalten die Zusammensetzungen als Komponente (b) alkoxysilylgruppenhaltige Polymere. Mehr bevorzugt sind die Polymere die Polymere der Formel (III) wie oben beschrieben.

Weiterhin bevorzugt sind Zusammensetzungen, die die erfindungsgemäß einsetzbaren Guanidingruppen aufweisende Siloxane oder Silane enthalten, sowie (b) mindestens ein alkoxysilylgruppenhaltiges Polymer.

Weiterhin bevorzugt sind Zusammensetzungen, die die erfindungsgemäß einsetzbaren Guanidingruppen aufweisenden semi-organische Siliciumgruppen enthaltenden Verbindungen der Formel (I) enthalten, sowie (b) mindestens eine alkoxysilylgruppenhaltige Verbindung.

Weiterhin bevorzugt sind Zusammensetzungen, die die erfindungsgemäß einsetzbaren Guanidingruppen aufweisenden semi-organische Siliciumgruppen enthaltenden Verbindungen enthalten, sowie (b) mindestens ein Polymer der Formel (III) wie oben beschrieben.

Insbesondere bevorzugt sind Zusammensetzungen, die die erfindungsgemäß einsetzbaren Guanidingruppen aufweisenden semi-organische Siliciumgruppen enthaltenden Verbindungen der Formel (I) enthalten, sowie (b) mindestens ein alkoxysilylgruppen haltiges Polymer der Formel (III) wie oben beschrieben.

Weiterhin bevorzugt sind die Zusammensetzungen, in denen die Komponente (a) frei von Alkoxysilylgruppen ist.

Erfindungsgemäße Beispiele für alkoxysilylgruppen haltige Polymere finden sich in: WO2002/034838, US 2010/068534, WO 1996/033249, WO 2011/080034, EP1081191, US7053135, WO 2012/020560, WO 2010/070666, WO 2011/046235, EP2388297, WO 2010/070894, EP2338938, EP2289997, EP2267083, WO 2009/020040, WO 2008/133265, WO 2006/134995, US 2006/241249, US 6541593, WO 2012/081483, EP1146062, EP1614717, WO 2011/032914, WO 2012/084762, WO 2012/084760, WO 2003/006534, WO 2011/026658, WO 2005/078036, US 2002/115811, US 2012/065308, US 2008/111103, US 2007/066768, US7365145, US 2007/179236, US 2009/005498, WO0037533, EP1264854, WO 2008/001784, WO 2009/022743, US5840806, EP1229092, WO 2002/053664, US5968681, EP0885913, US3201071, US6159389, US6162563, US 2003/124432, US 2003/110947, EP0819749, US 2011/154772, EP2289988, US5705590, EP2036944, WO 2011/054782, US 2011/232825, DE202006010035U, WO2008/014224, EP1738737, WO 2008/064872, DE102004045358, EP1563822, EP1650257, WO 2012/095826, EP1867693, US2005/113547, EP2003155, EP1380625, US2002016418, EP1457527, DE20201100010U, WO 2012/098115, WO 2009/145245, US 2008/312369, US7605203, EP2386287, US3388079, US5880245.

Insbesondere bevorzugte Alkoxysilylgruppen haltige Polymere als Bestandteil der Zusammensetzungen sind die der TEGOPAC®-Serie (TEGOPAC ist ein Warenzeichen der Evonik Industries AG, Essen), die der MS Polymer™ -Serie (MS Polymer ist ein Warenzeichen der Kaneka, Japan) z.B. MS Polymer S203H, ∼ S303H, ∼ S227 und ∼ S327, die der MS Silyl™ - Serie (MS Silyl ist ein Warenzeichen der Kaneka) z.B. MS Silyl der Unterserie ∼ SAT z.B. mit der Spezifikation ∼ 010 (MS Silyl SAT010) und ∼145, der Unterserie ∼ SAX z.B. mit der Spezifikation ∼ 015 (MA Silyl SAX015), ∼ 220, ∼ 260, ∼ 350, ∼ 400, ∼ 510, ∼ 520, ∼ 530, ∼ 580 und ∼ 590, der Unterserie ∼ MA z.B. mit der Spezifikation ∼451 (MS Silyl MA451), ∼ 850 und - 480, der Unterserie ∼ MAX z.B. mit der Spezifikation ∼ 602 (MS Silyl MAX602), ∼ 923 und ∼ 951, die der Desmoseal® -Serie (Desmoseal ist ein Warenzeichen der Bayer MaterialScience, Deutschland) z.B. Desmoseal der Unterserie ∼ S XP mit der Spezifikation ∼ 2458 (Desmoseal S XP 2458), ∼ 2636, ∼ 2774 und ∼ 2749, die der Genioseal® -Serie (Genioseal ist ein Warenzeichen der Wacker Chemie AG, Burghausen) z.B. Genioseal der Unterserie ∼ N z.B. mit der Spezifikation ∼ 35 (Genioseal N35), ∼ 35C, ∼ 45, ∼ 45-HAT, ∼ 70 und ∼ 70-HAT, der Unterserie ∼ WP z.B. mit der Spezifikation ∼ 1 (Genioseal WP1) und ∼ 2, der Unterserie XB z.B. mit der Spezifikation ∼ 502 (Genioseal XB 502), der Unterserie ∼ STP-E z.B. mit der Spezifikation ∼ 10 (Genioseal STP-E10), ∼ 15, ∼ 30 und ∼ 35, die der SPUR+ - Serie (SPUR+ ist ein Warenzeichen der Momentive Performance Materials Inc., Leverkusen) z.B. SPUR+ 1015LM, ∼ 1050MM, ∼ 3100HM und ∼ 3200HM, die der Polymer ST - Serie der Evonik Industries AG z.B. Polymer ST 47, ∼ 48, ∼ 61, ∼ 61LV, ∼ 75, ∼ 77, ∼ 80 und ∼ 81.

Die Zusammensetzungen können weitere Zusätze enthalten.

Bevorzugte Zusätze der Zusammensetzungen können ausgewählt sein aus der Gruppe der Verdünner, Co-Katalysatoren, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner Komplexbildner, Netzmittel, Co-Vernetzer, Sprühhilfsmittel, Vitamine, Wuchsstoffe, Hormone, pharmakologische Wirkstoffe, Duftstoffe, Radikalfänger und/oder andere Zuschlagstoffe.

Mehr bevorzugt enthalten die Zusammensetzungen außer den Komponenten (a) und (b) weitere Zusätze.

Die Zusammensetzungen enthalten 0,5 bis 4 %, insbesondere 1 bis 2% erfindungsgemäß einsetzbare Guanidingruppen aufweisende Siloxane bezogen auf die Gesamtmasse aller Komponenten der Zusammensetzung.

Die Zusammensetzungen sind bevorzugt zur Verklebung und/oder Abdichtung von partikulären oder flächigen Substraten geeignet. Eine weitere Einsatzmöglichkeit ist die Verwendung in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substraten geeignet. Die in dieser Erfindung verwendeten Alkoxylierungsprodukte können als Basis einer härtbaren Zusammensetzung hervorragend zur Beschichtung und Modifikation von Oberflächen und Fasern verwendet werden. Als weitere Beispiele sollen hier die Anwendungen auf Metallen, hier vor allem die Konstruktionswerkstoffe wie Eisen, Stahl, Edelstahl und Gusseisen, Eisenwerkstoffen, Aluminium, mineralischen Substraten, wie Stein, Estrich, Mörtel und Beton, Keramiken, Gläsern, keramischen Materialien, vor allem basierend auf festen Metall- oder Nichtmetalloxiden oder Carbiden, Aluminiumoxid, Magnesiumoxid oder Calciumoxid, sowie mineralische Substrate oder organische Substrate, Polyester, glasfaserverstärktem Polyester, Polyamid, Textilien und Gewebe aus Baumwolle und Polyester, Kork und/oder Holz genannt werden. Ebenso kann die Zusammensetzung zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern genutzt werden.

Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.

Die Zusammensetzungen sind weiterhin bevorzugt zur Beschichtung geeignet.

Die Applikation der Beschichtungsmassen findet im Allgemeinen durch Spritzapplikation statt, kann aber auch durch andere Applikationstechniken wie z. B. Streichen, Rollen, Fluten, Tauchen, Wischen, Gießen aufgetragen werden.

Die zu beschichtenden Gegenstände können eine glatte Oberfläche aufweisen, sie können aber auch wie z.B. im Falle von Textilien uneinheitliche Oberflächen aufweisen.

Als Substrate eignen sich metallische Untergründe wie z. B. Stahl, Stahlguss, Edelstahl, Aluminium, Aluminiumguss oder feuerverzinkter Stahl. Für eine bessere Haftung kann das Substrat durch Sandstrahlen oder Anschleifen angeraut werden.

Auch nichtmetallische Substrate wie Glas, Keramiken und Gewebe, im besonderen textile Gewebe können zum Einsatz kommen.

Die besondere Produktsicherheit der erfindungsgemäßen Verwendung ist gekennzeichnet durch einen Schutz vor Fehldosierungen, insbesondere Überdosierungen des Katalysators in den Zusammensetzungen. Die mechanischen Eigenschaften, wie z.B. die Durchhärtungsgeschwindigkeit, die Bruchspannung, die Bruchdehnung oder die Zugscherfestigkeit sind über einen weiten Bereich der Katalysatorkonzentration in der Gesamtzusammensetzung weitgehend unabhängig. So weisen z.B. S2-Schulterstäbe nur eine maximale relative Varianz der Bruchspannung von 25 % auf. Die Varianz wird berechnet durch Differenzbildung der Werte und wird bezogen auf den jeweils höchsten Wert. Weiterhin weisen Verklebungen nur eine maximale Varianz der Zugscherfestigkeit von bis zu 20 % oder weniger auf.

Demgegenüber weisen Produkte, die unter Zuhilfenahme von z.B. Zinnkatalysatoren hergestellt wurden, regelmäßig große Varianzen auf. So sinkt die Zugscherfestigkeit bei Verdopplung der Katalysatormenge um mehr als 25 %, bevorzugt mehr als 30 %. Insbesondere sinkt die Zugscherfestigkeit bei Erhöhung der Katalysatormenge von etwa 0,5 Gew.-% auf etwa 1 Gew.-% bezogen auf die Masse der Gesamtzusammensetzung um mehr als 40 %.

Weiterhin ist die besondere Produktsicherheit der erfindungsgemäßen Verwendung gekennzeichnet durch ein besseres toxikologisches Profil der Katalysatoren im Vergleich zu einer Vielzahl aus dem Stand der Technik bekannten schwermetallhaltigen Katalysatorsystemen, wie auch organozinnhaltigen oder organowismuthaltigen, insbesondere organozinnhaltigen Katalysatorsystemen.

Das erfindungsgemäße Verfahren zur Härtung von alkoxysilylgruppenhaltigen Verbindungen unter Bildung von Si-O-Si-Bindungen gemäß Anspruch 4 mit Hilfe mindestens einer erfindungsgemäß einsetzbaren Guanidingruppe aufweisenden semi-organische Siliciumgruppen enthaltenden Verbindung als Härtungskatalysator wird bevorzugt bei Raumtemperatur durchgeführt.

Bevorzugt ist das erfindungsgemäße Verfahren, in dem die alkoxysilylgruppenhaltigen Verbindungen ohne Zusatz von Metallverbindungen gehärtet werden.

Bevorzugte Metallkatalysatoren sind Zinn-Verbindungen wie z.B. Zinndiacetat, Zinndioctoat, Dibutylzinndiacetylacetonat, Dibutylzinndilaurat, Zinn Tetraacetat, Dibutylzinndiacetat, Dibutylzinndioctoat, Dibutylzinndilaurat, Dibutylzinndioleat, Dimethoxydibutylzinn, Dimetylzinn, Dibutylzinnbenzylmaleat, Bis (triethoxysiloxy)dibutylzinn, Diphenylzinndiacetat, sowie Wismutverbindungen, wie z.B. Wismutcarboxylate, sowie Titanverbindungen, wie z.B. Tetraethoxy- Titan, Tetra-n-propoxy-Titan, Tetra-i-propoxy-Titan, Tetra-n-butoxytitan, Tetra-i-butoxytitan, Tetrakis (2-ethylhexoxy) titan, Di-i-propoxybis (ethylacetoacetat) titan, dipropoxybis (acetylacetonat) titan, Di-i-propoxybis (acetylacetonat) titan, Dibutoxybis (acetylacetonat) titan, Tri-i-acetat propoxyallyl titan, Isopropoxy octylenglycol oder Bis (acetylacetonat) titanoxid, sowie Blei-Verbindungen, wie z.B. Bleidiacetat, Blei-di-2-ethylhexanoat, Blei-dineodecanoat, Bleitetraacetat, Blei tetrapropionat, sowie Zinkverbindungen, wie z.B. Zinkacetylacetonat, Zink-2- ethylcaproat, Zink-diacetat, Bis (2 -Ethylhexansäure) Zink, Zink-Dineodecanoat, Zink diundecenoat, Zinkdimethacrylat, sowie Zirkoniumverbindungen, wie z.B. Tetrakis (2-Ethylhexansäure) zirkoniumdichlorid, Tetrakis (Methacrylsäure) zirkoniumdichlorid, Kobalt-diacetat. Des Weiteren können auch Bismutkatalysatoren, sowie Eisen(II)- und Eisen(III)-Verbindungen, z.B. Eisen (III) acetylacetonat oder Eisen-diacetat, sowie Aluminiumverbindungen, z.B. Aluminiumacetylacetonat, sowie Calcium-verbindungen, z.B. Calciumethylendiamintetraacetat, sowie Magnesiumverbindungen, z.B. Magnesiumethylendiamin-tetraacetat eingesetzt werden.

Insbesondere bevorzugt sind die Verfahren, in denen die alkoxysilylgruppenhaltigen Verbindungen ohne Zusatz von Zinn- und / oder Wismutverbindungen gehärtet werden.

Bevorzugte alkoxysilylgruppenhaltige Verbindungen, die mit dem erfindungsgemäßen Verfahren gehärtet werden können, sind oben beschrieben worden.

Die Produkte des erfindungsgemäßen Verfahrens weisen in Bezug auf Fehldosierungen des Katalysators die oben genannten Vorteile auf. Insbesondere weisen die verfahrensgemäßen Produkte die oben genannten mechanischen Vorteile auf.

Ferner bewies sich die gute Handhabbarkeit der flüssigen und lagerstabilen Katalysatoren als weiter vorteilhaft gegenüber klassischen hydrolyselabilen Metallkatalysatoren. Besonders die Hydrolysestabilität ist hierbei hervorzuheben, da Katalysatoren wie z.B. Titanate oder Zirkonate durch Hydrolyse und anschließende Selbstkondensation desaktiviert werden. Die erfindungsgemäßen Katalysatoren weisen diesen Mangel nicht auf, sie erleiden keinen Aktivitätsverlust.

Die erfindungsgemäß einsetzbaren Guanidingruppen aufweisenden semi-organische Siliciumgruppen enthaltenden Verbindungen, die Zusammensetzungen enthaltend mindestens eine Guanidingruppe aufweisende semi-organische Siliciumgruppen enthaltende Verbindung sowie die erfindungsgemäße Verwendung der Guanidingruppen aufweisenden semi-organische Siliciumgruppen enthaltenden Verbindungen und ihrer Zusammensetzungen und weiterhin das erfindungsgemäße Verfahren unter Verwendung der Guanidingruppen aufweisenden semi-organische Siliciumgruppen enthaltenden Verbindungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

### Beispiele

### Allgemeine Methoden und Materialien

| | | |
|---|---|---|
| Diisononylphthalat | Vestinol 9 (DINP) | Evonik Industries AG, Essen |
| Diisoundecylphthalat | DIUP | Evonik Industries AG, Essen |
| gefälltes Calciumcarbonat | Socal U1S2 | Solvay Chemicals GmbH, Rheinberg |
| Titandioxid | Kronos 2310 | Kronos Titan GmbH, Leverkusen |
| Aerosil R202 | | Evonik Industries AG, Essen |
| Aerosil R974 | | Evonik Industries AG, Essen |
| Irganox 1135 | | BASF, Ludwigshafen |
| Tinuvin 292 | | BASF, Ludwigshafen |
| Tinuvin 1130 | | BASF, Ludwigshafen |
| Butyltitanat | TYZOR®TBT | Du Pont Europe, Belgium |
| Karstedt-Katalysatorzubereitung, 1% Pt° in Decamethylcyclopentasiloxan | | Evonik Industries AG, Essen |
| Dioctyl-Zinn-Diketonat | TIB KAT® 223 | TIB Chemicals, Mannheim |
| Polypropylenoxid | PPG (2000 g/mol) | BayerMaterial Science, Leverkusen |
| Isophorondiisocyanat | IPDI | Evonik Industries AG, Essen |
| Hexamethyldisiloxan, 98% | Kat. Nr. AB111176 | ABCR, Karlsruhe |
| Decamethylcyclopentasiloxan, 97% | Kat. Nr. AB111012 | ABCR, Karlsruhe |
| Phenylmethylcyclosiloxan, 95% | Kat. Nr. AB153228 | ABCR, Karlsruhe |
| Bis(aminopropyl)tetramethyldisiloxan, 97% | Kat. Nr. AB110832 | ABCR, Karlsruhe |
| Trifluormethansulfonsäure , >99% | Kat. Nr. 347817 | Sigma-Aldrich Chemie GmbH, München |
| 1,1,3,3-Tetramethylguanidin (TMG), 99% | Kat. Nr. 241768 | Sigma-Aldrich Chemie GmbH, München |
| *N*,*N*-Dicyclohexylcarbodiimid (DCC), 99% | Kat. Nr. D80002 | Sigma-Aldrich Chemie GmbH, München |
| Tetramethylammoniumhydroxid*5H₂O, >97% Lewatit® K 2621 | Kat. Nr. T7505 | Sigma-Aldrich Chemie GmbH, München LANXESS Deutschland GmbH, Leverkusen |
| 3-Glycidyloxypropyltriethoxysilan | Dynasylan GLYEO | Evonik Industries AG, Essen |
| Dynasylan® 1505 | | Evonik Industries, Essen |
| Dynasylan 1146 | | Evonik Industries AG, Essen |
| Dynasylan VTMO | | Evonik Industries AG, Essen |
| Dynasylan AMMO | | Evonik Industries AG, Essen |

### Viskosität:

Die Bestimmung der Viskositäten erfolgte wenn angegeben mittels eines Spindelviskosimeters Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturabhängigkeit der Viskosität wurden die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0-100°C (Skalenteile 1°C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte. Das Ergebnis der Messung wurde am Display des Viskosimeters in mPas ausgegeben, wobei die Division durch die Dichte (g/ml) die Viskosität in mm²/s liefert.

### Spektroskopische Analysen:

Die Aufnahme und Interpretation der NMR-Spektren ist dem Fachmann bekannt. Als Referenz sei das Buch "NMR Spectra of Polymers and Polymer Additives", A. Brandolini und D. Hills, 2000, Marcel Dekker, Inc. angeführt. Die Spektren wurden mit einem Bruker Spectrospin Spektrometer bei Raumtemperatur aufgenommen, die Messfrequenz betrug bei der Aufnahme der Protonenspektren 399,9 MHz, bei Aufnahme der ¹³C Spektren 100,6 MHz bzw. bei Aufnahme der ²⁹Si Spektren 79,5 MHz. Aufgrund der Basizität der hergestellten Guanidinosiloxane wurde auf die Verwendung chlorhaltiger deuterierter Lösungsmittel verzichtet und stattdessen Aceton-d6 bzw. Methanol-d4 (Sigma-Aldrich) verwendet.

Die Identifizierung der Guanidine gelang über die Verfolgung der Produktbildung im ¹³C-NMR. So zeigt sich z.B das Signal des Carbodiimid-Kohlenstoffs (RN=C=NR) bei .δ = 140 ppm und das Signal der Guanidingruppe in Abhängigkeit vom Substitutionsmuster des Guanidins HRN-C(=NR)-NRH bei .δ . = 150 - 160 ppm. Es sei an dieser Stelle erneut auf die Publikation von Xuehua Zhu, Zhu Du, Fan Xu and Qi Shen verwiesen (J. Org. Chem. 2009, 74, 6347-6349) und auf die Lehrbücher von Frederick Kurzer, K. Douragh-Zader - "Advances in the Chemistry of Carbodiimides" (Chemical Reviews, Vol. 67, Nr. 2, 1967, S. 99 ff.) bzw. Henri Ulrich -"Chemistry and Technology of Carbodiimides" (John Wiley & Sons Ltd., ISBN 978-0-470-06510-5, 2007).

### Bestimmung des Gesamtstickstoffgehaltes:

Die Bestimmung des basischen Stickstoffs erfolgt über eine potentiometrische Titration im nichtwässrigen Medium mit Perchlorsäure.

Bestimmung der relativen Molmasse einer Polymerprobe mittels Gelpermeationschromotographie (GPC):
Die gelpermeationschromatographischen Analysen (GPC) erfolgten mit einem Gerät Typ 1100 der Firma Hewlett-Packard unter Verwendung einer SDV-Säulenkombination (1000/10000 Å, je 65cm, Innendurchmesser 0,8 cm, Temperatur 30°C), THF als mobiler Phase mit einer Flussrate von 1ml/min und einem RI-Detektor (Hewlett-Packard). Die Kalibrierung des Systems erfolgte gegen einen Polystyrolstandard im Bereich von 162 - 2.520.000 g/mol.

### Inerte Arbeitsweise:

Unter "inerten" Bedingungen wird verstanden, dass der Gasraum innerhalb der Apparatur mit einem Inertgas, z.B. Stickstoff oder Argon gefüllt ist. Dies wird durch das Fluten der Apparatur erreicht, wobei das Anlegen eines permanenten leichten Inertgasstroms die fortlaufende Inertisierung gewährleistet.

### Beispiel 1: Synthesebeispiele

### S1 (E6): Herstellung eines Aminopropyl-methyl-dimethoxysilan-Kondensates

In einem 250 ml Vierhalskolben, ausgestattet mit KPG-Rührer, Rückflusskühler, Stickstoffeinleitung, Temperaturfühler und Heizhaube wurden unter inerten Bedingungen 100 g (520 mmol) Aminopropylmethyldiethoxysilan (Dynasilan® 1505) vorgelegt und auf 80 °C erhitzt. Sodann wurden portionsweise 18,8 g (1,04 mol) VE-Wasser hinzugegeben und für zwei Stunden bei 75 - 85 °C gehalten. Nach beendeter Hydrolyse wurde am Rotationsverdampfer bei 80 °C und 10 - 25 mbar eingeengt. Es konnte so ein klares und dem Edukt gegenüber eine deutlich höhere Viskosität aufweisendes Produkt der allgemeinen Formel HO-[Si^{(CH2)3NH2}Me]ₙ-OH mit n = 11-16 erhalten werden.

### S2 (E1): Herstellung eines linearen Aminosiloxans durch Äquilibrierung eines nach S1 hergestellten Kondensates mit HMDS

In einem 250 ml Vierhalskolben, ausgestattet mit KPG-Rührer, Rückflusskühler, Stickstoffeinleitung, Temperaturfühler und Heizhaube wurden unter inerten Bedingungen 75,08 g eines Kondensates nach S1 mit einem Stickstoffwert von N_{ges.} = 11,5 Gew.-% und einer Viskosität von 807 mPas (Brookfield) vorgelegt und mit 74,9 g Hexamethyldisiloxan versetzt. Unter Rührung des Reaktionsgemisches erfolgte sodann die Zugabe von 0,08 g (= 0,05 Gew.-%) Tetramethylammoniumhydroxid und es wurde auf 90°C erhitzt. Das zweiphasige, trübe und farblose Reaktionsgemisch wurde nach 1 Stunde Reaktionszeit homogen und klar, trübte jedoch über die Gesamtreaktionszeit von 6,5 Stunden wieder leicht ein. Die Zerstörung des Katalysators erfolgte nach Ende der Reaktionszeit am Rotationsverdampfer für 3 Stunden bei 150 °C und 1 mbar. Es wurde dabei eine Fraktion flüchtiger Bestandteile von 31,8 Gew.-% bestimmt. Die ²⁹Si-NMR Analyse des Endproduktes bestätigte die Struktur von M-[D^{(CH2)3NH2}]_{3,3}-M und es wurde ein Stickstoffwert zu N_{ges}= 8,5 Gew.-% bestimmt.

### S3 (H1): Hydrosilylierung von Allylglycidylether an ein seitenständiges Wasserstoffsiloxan

In einem 1000 ml Mehrhalskolben, ausgestattet mit KPG-Rührer, Rückflusskühler, Stickstoffeinleitung, Temperaturfühler, Tropftrichter und Heizhaube wurden unter inerten Bedingungen 95,4 g (0,84 mol) Allylglycidylether vorgelegt und auf 70°C erhitzt. Im Stickstoffgegenstrom wurden nachfolgend 198 mg einer Karstedt-Katalysatorzubereitung (entspricht 5 ppm Pt°) zugegeben. Binnen 30 Minuten wurden sodann über einen Tropftrichter 300 g eines seitenständigen Wasserstoffsiloxans (2,23 mol SiH/kg) hinzugegeben. Die Tropfgeschwindigkeit wurde dabei so eingeregelt, dass eine Reaktionstemperatur von maximal 90°C erreicht wurde. Nach 3 Stunden wurde der SiH Umsatz gasvolumetrisch zu 82 % bestimmt. Um die Reaktion zu vervollständigen wurden weitere 20 g (0,18 mol) Allylglycidylether und 99 mg der Karstedt-Katalysatorzubereitung (entspricht 2,5 ppm Pt°) hinzugegeben und so die Reaktion bei 70°C binnen weiterer 7 Stunden zum einem SiH Umsatz >99% geführt. Das erhaltene Produkt wurde am Rotationsverdampfer bei 130°C und einem Druck < 1mbar mehrstündig ausdestilliert. Das epoxyfunktionelle Siloxan konnte so als klare, leicht gelbliche Flüssigkeit erhalten werden. Die Untersuchung mittels ²⁹Si-NMR bestätigte die Zielstruktur.

### S4 (N1): Ringöffnung des Epoxides S3 mit Ammoniak

Das erhaltene Produkt S3 wurde analog WO2011095261 (US 2012/282210) einer epoxidischen Ringöffnung mittels Ammoniak unterzogen. Dazu wurden 50 g des Epoxysiloxans in 100 g Isopropanol aufgenommen und in ein Autoklavenrohr überführt. Mittels einer Ethanol/Trockeneis-Mischung wurde die Außenwandung des Autoklavenrohres in der Form heruntergekühlt, dass die Einkondensation von 10,9 g Ammoniak durch einfaches Einleiten mittels einer Glasfritte binnen 30 Minuten gelang. Das Rohr wurde verschlossen und 4 Stunden auf 100°C erhitzt. Am Rotationsverdampfer wurde sodann binnen einer Stunde bei 60°C und <1 mbar das Isopropanol und überschüssiger Ammoniak abdestilliert. Die nasschemische Bestimmung des primären Stickstoffwertes belegte im Einklang mit dem Theoriewert 2,8 Gew.-%.

### S5 (G1): Herstellung eines Guanidins durch Umsetzung des Syntheseproduktes S4

In einem 250 ml Vierhalskolben, ausgestattet mit KPG-Rührer, Destillationsbrücke mit Vakuumvorstoß, Stickstoffabdeckung, Temperaturfühler und Heizhaube wurden unter inerten Bedingungen 71,13 g (147,34 mmol/-NH2) des aminofunktionellen Siloxans aus der Vorstufe und 28,87 g (139,92 mmol) *N*,*N*-Dicyclohexylcarbodiimid vorgelegt und bei 90 °C für 10 Stunden miteinander zur Reaktion gebracht. Nach vollendeter Reaktionszeit wurden bei 90°C und 20 mbar im Membranpumpenvakuum sämtliche flüchtigen Bestandteile binnen einer Stunde abdestilliert. Die Untersuchung mittels ²⁹Si- und ¹³C- NMR bestätigte die Zielstruktur des klaren, leicht gelblichen Produktes.

### S6 (H2): Hydrosilylierung von Allylglycidylether an ein cyclisches Wasserstoffsiloxan

In einem 1000 ml Mehrhalskolben, ausgestattet mit KPG-Rührer, Rückflusskühler, Stickstoffeinleitung, Temperaturfühler, Tropftrichter und Heizhaube wurden unter inerten Bedingungen 93,3 g (0,82 mol) Allylglycidylether vorgelegt und auf 70°C erhitzt. Im Stickstoffgegenstrom wurden nachfolgend 197 mg einer Karstedt-Katalysatorzubereitung (entspricht 5 ppm Pt°) zugegeben. Binnen 30 Minuten wurde sodann über einen Tropftrichter 300 g eines cyclischen Wasserstoffsiloxans (2,18 mol SiH/kg) hinzugegeben. Die Tropfgeschwindigkeit wurde dabei so eingeregelt, dass eine Reaktionstemperatur von maximal 90°C erreicht wurde. Nach 3,5 Stunden wurde der SiH Umsatz gasvolumetrisch zu 74 % bestimmt. Um die Reaktion zu vervollständigen wurden weitere 19 g (0,17 mol) Allylglycidylether und 197 mg der Karstedt-Katalysatorzubereitung (entspricht 5 ppm Pt°) hinzugegeben und so die Reaktion bei 70°C binnen weiterer 7 Stunden zum einem SiH Umsatz >99% geführt. Das erhaltene Produkt wurde am Rotationsverdampfer bei 100°C und einem Druck 15 mbar mehrstündig ausdestilliert. Das epoxyfunktionelle Siloxan konnte so als klare, leicht gelbliche Flüssigkeit erhalten werden. Die Untersuchung mittels ²⁹Si-NMR bestätigte die Zielstruktur mit einem theoretischen Epoxywert von 2,79 %.

### S7 (N2): Ringöffnung des Epoxides S6 mit Ammoniak

Das erhaltene Produkt (S6) wurde im Weiteren analog WO2011095261 (US 2012/282210) einer epoxidischen Ringöffnung mittels Ammoniak unterzogen. Dazu wurden 250 g des Epoxysiloxans (theor. Epoxywert 2,79 %) in 500 g Isopropanol aufgenommen und in ein Autoklavenrohr überführt. Mittels einer Ethanol/Trockeneis-Mischung wurde die Außenwandung des Autoklavenrohres in der Form heruntergekühlt, dass die Einkondensation von 60 g Ammoniak (710 % Überschuss) durch einfaches Einleiten mittels einer Glasfritte binnen 30 Minuten gelang. Das Rohr wurde verschlossen und 4 Stunden auf 100°C erhitzt wobei ein Druckanstieg bis 22 bar zu verzeichnen war. Nach Ende der Reaktionszeit wurde auf Raumtemperatur abgekühlt und das Druckgefäß entspannt. Am Rotationsverdampfer wurde binnen einer Stunde bei 60°C und <1 mbar das Isopropanol und überschüssiger Ammoniak abdestilliert. Die nasschemische Bestimmung des primären Stickstoffwertes belegte im Einklang mit dem Theoriewert 2,8 Gew.-%.

### S8 (G2): Herstellung eines Guanidingruppen aufweisenden cyclischen Siloxans

In einem 250 ml Vierhalskolben, ausgestattet mit KPG-Rührer, Destillationsbrücke mit Vakuumvorstoß, Stickstoffabdeckung, Temperaturfühler und Heizhaube wurden unter inerten Bedingungen 75,72 g (156,84 mmol/-NH2) des aminofunktionellen Siloxans aus der Vorstufe S7 und 24,28 g (117,67 mmol) *N*,*N*-Dicyclohexylcarbodiimid vorgelegt und bei 90 °C für 10 Stunden miteinander zur Reaktion gebracht. Nach vollendeter Reaktionszeit wurden bei 90°C und 20 mbar im Membranpumpenvakuum sämtliche flüchtigen Bestandteile binnen einer Stunde abdestilliert. Die Untersuchung mittels ²⁹Si- und ¹³C- NMR bestätigte die Zielstruktur des klaren, leicht orangefarbenen Produktes.

S9 (E3): Äquilibrierung des Kondensates S1 zu einem cyclischen Aminopropylsiloxan In einem 1000 ml Mehrhalskolben, ausgestattet mit KPG-Rührer, Rückflusskühler, Stickstoffeinleitung, Temperaturfühler, Tropftrichter und Heizhaube wurden unter inerten Bedingungen 61,2 g (522 mmol/-NH2) eines gemäß S1 hergestellten Kondensates vorgelegt und 38,8 g (523 mmol / D) Octamethylcyclotetrasiloxan, 400 g Xylol und 2,5 g Tetramethylammoniumhydroxid * pentahydrat (TMAH*5H₂O) hinzugegeben. Das Reaktionsgemisch wurde für 6 Stunden auf 90 °C erhitzt und dann zur Zerstörung des Katalysators für 8 Stunden auf Rückflusstemperatur erhitzt. Dabei wurde der kontinuierliche Aminabgang mittels eines pH-Papiers im Stickstoffstrom gemessen. Nach beendeter Zerstörung des Katalysators wurde am Rotationsverdampfer das Lösungsmittel entfernt und bei 100 °C und < 1 mbar für 1 Stunde am Rotationsverdampfer scharf ausdestilliert. Das leicht trübe Produkt wurde abschließend über einen Faltenfilter filtriert, sodass ein klares und farbloses Produkt erhalten werden konnte.

### S10 (G3): Herstellung eines cyclischen Guanidins durch Umsetzung eines cyclischen Aminosiloxans mit DCC

In einem 250 ml Mehrhalskolben, ausgestattet mit KPG-Rührer, Rückflusskühler, Stickstoffeinleitung, Temperaturfühler und Heizhaube wurden unter inerten Bedingungen 80 g des cyclischen Aminopropylsiloxans S9 vorgelegt und mit 82,6 g (400 mmol) *N*,*N*-Dicyclohexylcarbodiimid (DCC) versetzt. Das Gemisch wurde für sechs Stunden bei 90 °C zur Reaktion gebracht und anschließend wurden flüchtige Bestandteile für eine Stunde bei 15 mbar ausdestilliert. Das Produkt konnte als ein klares, leicht gelbliches Produkt erhalten werden, welches bei Raumtemperatur fest war. Die Analyse mittels ¹³C-NMR Spektroskopie ergab einen vollständigen Umsatz des Carbodiimids.

### S11 (E4): Äquilibrierung des Kondensates S1 zu einem cyclischen Aminopropylphenylmethylsiloxan

In einem 250 ml Mehrhalskolben, ausgestattet mit KPG-Rührer, Rückflusskühler, Stickstoffeinleitung, Temperaturfühler, Tropftrichter und Heizhaube wurden unter inerten Bedingungen 11,6 g (99 mmol/-NH2) eines gemäß S1 hergestellten Kondensates vorgelegt und 13,5 g (99 mmol / D^{PhMe}) Phenylmethylcyclotetrasiloxan (CAS 546-45-2), 100 g Xylol und 0,6 g Tetramethylammoniumhydroxid-pentahydrat (TMAH*5H₂O) hinzugegeben. Das Reaktionsgemisch wurde für 6 Stunden auf 90 °C erhitzt und dann zur Zerstörung des Katalysators für 8 Stunden auf Rückflusstemperatur erhitzt. Dabei wurde der kontinuierliche Aminabgang mittels eines pH-Papiers im Stickstoffstrom gemessen. Nach beendeter Zerstörung des Katalysators wurde am Rotationsverdampfer das Lösungsmittel entfernt und bei 100 °C und < 1 mbar für eine Stunde am Rotationsverdampfer scharf ausdestilliert. Das leicht trübe Produkt wurde abschließend über einen Faltenfilter filtriert, sodass ein klares und farbloses Produkt erhalten werden konnte.

### S12 (G4): Herstellung eines Guanidingruppen aufweisenden cylcischen Siloxanes durch Umsetzung eines cyclischen Aminopropyl-phenylmethylsiloxans mit DCC

In einem 100 ml Mehrhalskolben, ausgestattet mit KPG-Rührer, Rückflusskühler, Stickstoffeinleitung, Temperaturfühler und Heizhaube wurden unter inerten Bedingungen 21,4 g (84,5 mmol /-NH₂) des cyclischen Aminopropyl-phenylmethylsiloxans (S11) vorgelegt und mit 16,6 g (80,5 mmol) *N,N-*Dicyclohexylcarbodiimid (DCC) versetzt. Das Gemisch wurde für sechs Stunden bei 90 °C zur Reaktion gebracht und anschließend wurden flüchtige Bestandteile für eine Stunde bei 15 mbar ausdestilliert. Das Produkt konnte als ein klares, leicht gelbliches Produkt erhalten werden, welches bei Raumtemperatur fest war. Die Analyse mittels ¹³C-NMR Spektroskopie ergab einen vollständigen Umsatz des Carbodiimids.

### S13 (G5): Synthese eines Guanidinogruppen aufweisenden Cyclotetrasiloxans durch Umsetzung von Tetra(chlorpropyl)tetramethylcyclosiloxan mit Tetramethylguanidin

In einem 500 ml Mehrhalskolben, ausgestattet mit KPG-Rührer, Rückflusskühler, Stickstoffeinleitung, Temperaturfühler und Heizhaube wurden unter inerten Bedingungen 50 g (0,37 mol) Tetra(chlorpropyl)tetramethylcyclosiloxan D₄^{(CH2)3Cl}, welches durch vorherige wässrige Hydrolyse-/Kondensation eines Chlorpropyldichlormethylsilans gewonnen wurde, auf 60°C erhitzt und binnen 30 Minuten eine Menge von 126,4 g (1,1 mol) Tetramethylguanidin hinzugegeben. Die Reaktionstemperatur wurde auf 130°C erhöht und für 6 Stunden gehalten wobei mit fortschreitender Reaktionszeit eine starke Salzbildung beobachtet werden konnte. Nach beendeter Reaktionszeit wurde auf Raumtemperatur abkühlen gelassen und mit 100 ml Toluol verdünnt. Das Produkt wurde sodann mittels einer Filterpresse (Seitz K300) vom Salz befreit und anschließend am Rotationsverdampfer für 1 Stunde bei 100°C und einem Druck <1 mbar vom nicht umgesetzten Tetramethylguanidin befreit. Das cyclische Tetraguanidinopropyltetrasiloxan konnte nach Destillation als trübes, leicht gelbliches Produkt erhalten werden. Die Untersuchung per ¹H- und ²⁹Si-NMR bestätigte die Struktur.

### S14 (G6): Synthese eines cyclischen Guanidinosiloxans durch Umsetzung von 2,4,6,8-Tetrakis(3-chloropropyl)-2,4,6,8-tetramethyl-cyclotetrasiloxane [D₄^{(C3H6Cl)}] mit TMG

In einem 500 ml Mehrhalskolben, ausgestattet mit KPG-Rührer, Tropftrichter, Innentemperaturmessfühler und Inertgaszuleitung wurden nach ausgiebiger Inertisierung mit Stickstoff 100 g (183 mmol = 732 mmol/-C₃H₆Cl) 2,4,6,8-Tetrakis(3-chloropropyl)-2,4,6,8-tetramethyl-cyclotetrasiloxane [CAS 96322-87-1] vorgelegt und auf 60 °C erhitzt. Sodann wurde 252,8 g (2,2 mol) Tetramethylguanidin zu dosiert und für 6 Stunden auf 130°C erhitzt. Nach einsetzendem starkem Salzausfall wurden 200 ml Toluol hinzugegeben um die Rührfähigkeit des Ansatzes zu gewährleisten. Nach beendeter Reaktion wurde mittels einer Filterpresse über einen Seitz K300 Filter das Salz separiert. Nicht umgesetztes Tetramethylguanidin wurde anschließend aus dem Filtrat im scharfen Ölpumpenvakuum (< 1mbar) für 1 Stunde bei 100°C abdestilliert. Das erhaltene viskose, leicht gelbliche und trübe Produkt wurde unter Inertgas abgefüllt.

### S15 (E5): Äquilibrierung von Phenylmethylcyclosiloxan und 2,4,6,8-Tetrakis(3-chloropropyl)-2,4,6,8-tetramethyl-cyclotetrasiloxane

In einem 250 ml Mehrhalskolben, ausgestattet mit KPG-Rührer, Tropftrichter, Innentemperaturmessfühler und Inertgaszuleitung wurden nach ausgiebiger Inertisierung mit Stickstoff 20 g (147 mmol) Phenylmethylcyclosiloxan (CAS 546-45-2) vorgelegt. Dann wurden 20 g (36,6 mmol = 147 mmol/-C₃H₆Cl) Tetrakis(3-chloropropyl)-2,4,6,8-tetramethyl-cyclotetrasiloxane, 160 g Toluol und 12 g Lewatit® K2621 hinzugegeben. Es wurde sodann für 6 Stunden bei 60 °C äquilibriert und der Lewatit® Katalysator über einen Faltenfilter abgetrennt. Das Filtrat wurde am Rotationsverdampfer von Toluol befreit und sodann eine Stunde bei 70°C und < 1 mbar ausdestilliert. Das so erhaltene klare und farblose Produkt wurde unter Inertgas abgefüllt.

### S16 (G7): Synthese eines cyclischen Guanidinosiloxans durch Umsetzung von S15 mit Tetramethylguanidin

In einem 500 ml Mehrhalskolben, ausgestattet mit KPG-Rührer, Tropftrichter, Innentemperaturmessfühler und Inertgaszuleitung wurden nach ausgiebiger Inertisierung mittels Stickstoff 30 g (55 mmol = 110 mmol/-C₃H₆Cl) S15 Äquillibrat vorgelegt und mit 38 g (330 mmol) Tetramethylguanidin sowie 40 g Xylol versehen. Das Reaktionsgemisch wurde erhitzt und für 6 Stunden auf einer Reaktionstemperatur von 130 °C gehalten. Nach beendeter Reaktion wurde mittels einer Filterpresse über einen Seitz K300 Filter vom ausgefallenen Tetramethylhydrochlorid separiert. Nicht umgesetztes Tetramethylguanidin und das Lösungsmittel wurden anschließend aus dem Filtrat im scharfen Ölpumpenvakuum (< 1mbar) für eine Stunde bei 100°C abdestilliert. Das erhaltene hochviskose, leicht gelbliche und klare Produkt wurde unter Inertgas abgefüllt.

### S17 (G8): Synthese von 2',2'-((1,1,3,3-tetramethyldisiloxan-1,3-diyl)bis(propan-3,1-diyl))bis(1,3-dicyclohexylguanidin)

In einem 250 ml Vierhalskolben, ausgestattet mit KPG-Rührer, Rückflusskühler, Stickstoffabdeckung, Temperaturfühler und Heizhaube wurden unter inerten Bedingungen 24,85 g (100 mmol) 1,3-Bis(3-aminopropyl)tetramethyldisiloxan vorgelegt und 40,44 g (196 mmol) *N*,*N*-Dicyclohexylcarbodiimid hinzugegeben. Unter fortwährender Rührung wurde das Reaktionsgemisch für 6 Stunden bei 90°C zur Reaktion gebracht und im Anschluss wurden im Membranpumpenvakuum sämtliche flüchtigen Bestandteile binnen 30 Minuten abdestilliert. Es wurde ein klares, viskoses Produkt erhalten welches nach Analyse mittels ¹³C-NMR einen vollständigen Umsatz des Carbodiimids aufwies.

### S18 (G9): Umsetzung des Kondensates S1 mit DCC

In einem 500 ml Vierhalskolben, ausgestattet mit KPG-Rührer, Rückflusskühler, Stickstoffabdeckung, Temperaturfühler und Heizhaube wurden unter inerten Bedingungen 128,09 g eines Kondensates gemäß S1 (N-Wert= 11,3 Gew.-%, 122,5 g/eq -NH_{2,} = 1,05 mol -NH2) vorgelegt und 71,91 g (348,52 mmol) *N,N-*Dicyclohexylcarbodiimid hinzugegeben. Unter fortwährendem Rühren wurde das Reaktionsgemisch für 6 Stunden bei 90°C zur Reaktion gebracht und im Anschluss wurden im Membranpumpenvakuum sämtliche flüchtige Bestandteile binnen 30 Minuten abdestilliert. Es wurde ein klares, viskoses Produkt (S18) erhalten, welches nach analytischer Analyse mittels ¹³C-NMR einen vollständigen Umsatz des Carbodiimids aufwies.

### S19 (G10): Umsetzung von des Kondensates S1 mit DCC

In einem 500 ml Vierhalskolben, ausgestattet mit KPG-Rührer, Rückflusskühler, Stickstoffabdeckung, Temperaturfühler und Heizhaube wurden unter inerten Bedingungen 94,21 g eines Kondensates gemäß S1 (N-Wert= 11,3 Gew.-%, 122,5 g/eq -NH₂, =769,1 mmol) vorgelegt und 105,79 g (512,72 mmol) *N,N-*Dicyclohexylcarbodiimid hinzugegeben. Unter fortwährendem Rühren wurde das Reaktionsgemisch für 6 Stunden bei 90°C zur Reaktion gebracht und im Anschluss im Membranpumpenvakuum sämtliche flüchtige Bestandteile binnen 30 Minuten abdestilliert. Es wurde ein klares, in der Wärme hoch viskoses Produkt erhalten, welches nach Analyse mittels ¹³C-NMR einen vollständigen Umsatz des Carbodiimids aufwies. Nach Abkühlung auf RT erstarrte das Produkt zu einer klaren Masse, die jedoch reversibel aufschmelzbar war.

### S20 (E7): Herstellung eines linearen Siloxans der Formel MD₃D^{C3H6Cl}M

In einem 250 ml Einhalskolben wurden 39,3 g (288 mmol/D^{C3H6Cl}) eines Chlorpropyldichlormethylsilan-Hydrolysekondensates 64 g (863 mmol/D) Decamethylcyclopentasiloxan und 46,7 g (288 mmol/MM) Hexamethyldisiloxan vorgelegt. Unter Magnetrührung wurde 0,15 g Trifluormethansulfonsäure hinzugegeben und über Nacht gerührt. Am Folgetag wurde die Äquilibrierung am Rotationsverdampfer für 4 Stunden bei 90°C vervollständigt und danach durch Zugabe von 8 g Natriumhydrogencarbonat die Säure desaktiviert. Die Filtration über einen Faltenfilter lieferte 158 g einer farblosen, klaren Flüssigkeit. Die Analyse mittels ²⁹Si-NMR Spektroskopie bestätigte die Struktur [MD₃D^{C3H6Cl}M].

S21 (G11): Herstellung eines linearen Guanidinopropylgruppen aufweisenden Siloxans In einem 250 ml Vierhalskolben, ausgestattet mit KPG-Rührer, Rückflusskühler, Stickstoffeinleitung, Temperaturfühler und Heizhaube wurden unter inerten Bedingungen 80 g (153 mmol/ D^{C3H6Cl}) S20 vorgelegt und auf 100 °C erhitzt. Es wurden sodann über einen Tropftrichter 53 g (460 mmol) Tetramethylguanidin binnen einer Stunde hinzudosiert und weitere 8 Stunden bei 130 °C gehalten. Nach beendeter Reaktion wurde das ausgefallene Tetramethylguanidinhydrochlorid abfiltriert und das Produkt im Ölpumpenvakuum bei 6 mbar bei 130 °C für eine Stunde destilliert. Eine erneute Filtration lieferte 55 g eines klaren Produktes. ²⁹Si- und ¹³C- NMR Untersuchungen bestätigten die Struktur.

### S22 (E8): Herstellung eines linearen Siloxans der Formel MD₃D^{C3H6NH2}M

In einem 250 ml Mehrhalskolben, ausgestattet mit KPG-Rührer, Rückflusskühler, Stickstoffeinleitung, Temperaturfühler, Tropftrichter und Heizhaube wurden unter inerten Bedingungen 35 g (300 mmol/-NH2) eines Kondensates gemäß S1 mit einem Stickstoffwert von N_{ges.} = 11,5 Gew.-% und einer Viskosität von 807 mPas (Brookfield) vorgelegt und 66,58 g (900 mmol / D) Octamethylcyclotetrasiloxan, 48,5 g (300 mmol/ MM) Hexamethyldisiloxan und 60 mg Tetramethylammoniumhydroxid * pentahydrat (TMAH*5H₂O) hinzugegeben. Das Reaktionsgemisch wurde für 6 Stunden auf 90 °C erhitzt und dann zur Zerstörung des Katalysators für 3 Stunden am Rotationsverdampfer bei 130 °C erhitzt. Nach beendeter Zerstörung des Katalysators wurde am Rotationsverdampfer das Lösungsmittel entfernt und bei 100 °C und < 1 mbar für 1 Stunde am Rotationsverdampfer scharf ausdestilliert. Das leicht trübe Produkt wurde abschließend über einen Faltenfilter filtriert, sodass ein klares und farbloses Produkt erhalten werden konnte, welches gemäß ²⁹Si NMR eine ungefähre Struktur von M(DD^{C3H6NH2})_{7,4}M aufwies.

### S23 (G12): Herstellung eines linearen Guanidingruppen tragenden Siloxans der Formel MD₃D^{C3H6-GUA}M

In einem 100 ml Vierhalskolben, ausgestattet mit KPG-Rührer, Rückflusskühler, Stickstoffeinleitung, Temperaturfühler und Heizhaube wurden unter inerten Bedingungen 50 g (135 mmol / -NH₂) des zuvor (S22) hergestellten linearen Aminosiloxans (Nt_{heor.}= 3,787 %) vorgelegt und mit 26,5 g (128 mmol) *N,N-*Dicyclohexylcarbodiimid versetzt. Die so erhaltene Reaktionsmischung wurde für 6 Stunden bei 90°C zur Reaktion gebracht, wobei ein farbloses, leicht trübes Produkt erhalten werden konnte. Die Untersuchung mittels ¹³C- NMR Spektroskopie ergab einen vollständigen Umsatz des Carbodiimids. Im Weiteren wurde durch ²⁹Si- NMR Spektroskopie eine Siloxan-Kettenlänge von N= 5,6 bestimmt, sodass eine Struktur von M(DD^{C3H6GUA})_{3,6}M angenommen werden kann.

### S24 (E9): Herstellung eines linearen Aminopropylsiloxans durch Äquilibrierung von S1 mit HMDS

In einem 250 ml Vierhalskolben, ausgestattet mit KPG-Rührer, Rückflusskühler, Stickstoffeinleitung, Temperaturfühler und Heizhaube wurden unter inerten Bedingungen 90 g eines Kondensates gemäß S1 mit einem Stickstoffwert von N_{ges.} = 11,5 Gew.-% und einer Viskosität von 807 mPas (Brookfield) vorgelegt und mit 60 g Hexamethyldisiloxan versetzt. Unter Rührung des Reaktionsgemisches erfolgte sodann die Zugabe von 0,08 g (= 0,05 Gew.-%) Tetramethylammoniumhydroxid und es wurde auf 90°C erhitzt. Das zweiphasige, trübe und farblose Reaktionsgemisch wurde nach 1 Stunde Reaktionszeit homogen und klar. Die Zerstörung des Katalysators erfolgte nach Ende der Reaktionszeit am Rotationsverdampfer für 3 Stunden bei 150 °C und 1 mbar. Es wurde dabei eine Fraktion flüchtiger Bestandteile von 20 Gew.-% bestimmt. Die ²⁹Si-NMR Analyse des Endproduktes bestätigte die Struktur von M-[D^{(CH2)3NH2}]_{3,5}-M und es wurde ein Stickstoffwert zu N_{ges}= 8,7 Gew.-% bestimmt.

S25 (G14): Herstellung eines linearen Guanidinopropylgruppen aufweisenden Siloxans In einem 250 ml Vierhalskolben, ausgestattet mit KPG-Rührer, Rückflusskühler, Stickstoffeinleitung, Temperaturfühler und Heizhaube wurden unter inerten Bedingungen 104,05 g (646 mmol / -NH₂) des zuvor S24 hergestellten linearen Aminosiloxans (Nt_{heor.}= 8,7 %) vorgelegt und mit 126,8 g (614 mmol) *N,N-*Dicyclohexylcarbodiimid versetzt. Die so erhaltene Reaktionsmischung wurde für 6 Stunden bei 90°C zur Reaktion gebracht, wobei ein in der Wärme farbloses, leicht gelbstichiges Produkt erhalten werden konnte, welches beim Abkühlen auf fest wurde, jedoch reversibel aufschmelzbar war. Die Untersuchung mittels ¹³C-NMR Spektroskopie ergab einen vollständigen Umsatz des Carbodiimids. Im Weiteren wurde durch ²⁹Si- NMR Spektroskopie eine Siloxan-Kettenlänge von N= 5,5 bestimmt, sodass eine Struktur von M(D^{C3H6GUA})_{3,5}M angenommen werden kann.

### S26 (G14): Herstellung eines linearen Guanidinopropyl- und Aminopropylgruppen aufweisenden Siloxans

In einem 100 ml Vierhalskolben, ausgestattet mit KPG-Rührer, Rückflusskühler, Stickstoffeinleitung, Temperaturfühler und Heizhaube wurden unter inerten Bedingungen 49,18 g (299 mmol / -NH₂) eines linearen Aminosiloxans analog S24 mit einem Stickstoffwert von Nt_{heor.}= 8,5 Gew.-% vorgelegt und mit 30,8 g (149 mmol) *N,N-*Dicyclohexylcarbodiimid versetzt. Die so erhaltene Reaktionsmischung wurde für 6 Stunden bei 90°C zur Reaktion gebracht, wobei farbloses, klares Produkt erhalten werden konnte. Die Untersuchung mittels ¹³C- NMR Spektroskopie ergab einen vollständigen Umsatz des Carbodiimids. Im Weiteren wurde durch ²⁹Si- NMR Spektroskopie eine Siloxan-Kettenlänge von N= 5,6 bestimmt, sodass eine Struktur von M(D^{C3H6NH2})_{∼1,8}(D^{C3H6-GUA})_{∼1,8}M angenommen werden kann.

S27 (G15): Herstellung eines linearen Guanidinopropylgruppen aufweisenden Siloxans In einem 100 ml Vierhalskolben, ausgestattet mit KPG-Rührer, Rückflusskühler, Stickstoffeinleitung, Temperaturfühler und Heizhaube wurden unter inerten Bedingungen 37,7 g (215 mmol / -NH₂) eines zuvor analog S24 hergestellten linearen Aminosiloxans (N= 8,7 Gew.-%) vorgelegt und mit 42,2 g (204 mmol) *N,N-*Dicyclohexylcarbodiimid versetzt. Die so erhaltene Reaktionsmischung wurde für 8 Stunden bei 90°C zur Reaktion gebracht, wobei ein leicht gelbstichiges, klares und viskoses Produkt erhalten werden konnte. Die Untersuchung mittels ¹³C-NMR Spektroskopie ergab einen vollständigen Umsatz des Carbodiimids. Im Weiteren wurde durch ²⁹Si- NMR Spektroskopie eine Siloxan-Kettenlänge von N= 4,7 bestimmt, sodass eine Struktur von M(DD^{C3H6GUA})_{2,7}M angenommen werden kann.

### S28: Herstellung eines linearen Guanidingruppen aufweisenden hydroxyterminierten Siloxankondensats

In einem 250 ml Vierhalskolben, ausgestattet mit KPG-Rührer, Rückflusskühler, Stickstoffabdeckung, Temperaturfühler und Heizhaube wurden unter inerten Bedingungen 102,08 g (232,24 mmol -NH2) eines linearen Siloxankondensates, welches Propyl- und Aminopropylgruppen aufweist und hydroxyterminiert ist (N_{prim.}=3,64 Gew.-%, M_{w}=∼730 g/mol) vorgelegt und 47,92 g (232,24 mmol) *N,N-*Dicyclohexylcarbodiimid hinzugegeben. Unter fortwährender Rührung wurde das Reaktionsgemisch für 6 Stunden bei 90°C zur Reaktion gebracht und im Anschluss im Membranpumpenvakuum sämtliche flüchtige Bestandteile binnen 30 Minuten abdestilliert. Es wurde ein klares, viskoses Produkt erhalten, welches nach Analyse mittels ¹³C-NMR einen vollständigen Umsatz des Carbodiimids aufwies.

### S29 (H3): Hydrosilylierung von N-Ethylmethallylamin (NEMALA) an ein cyclisches Wasserstoffsiloxan

In einem 2000 ml Mehrhalskolben, ausgestattet mit KPG-Rührer, Rückflusskühler, Stickstoffeinleitung, Temperaturfühler, Tropftrichter und Heizhaube wurden unter inerten Bedingungen 756,3 g eines cyclischen Wasserstoffsiloxans (0,1332 Gew.-%, entspr. 756,3 g/eq. SiH) vorgelegt, mit 4,43 g Natriumcarbonat versetzt und auf eine Reaktionstemperatur von 130°C erhitzt. Kurz vor dem Erreichen der Reaktionstemperatur wurden 48 mg Di-µ-chlorodichlorobis(cyclohexene)diplatinum(II) Katalysator hinzugegeben und sodann über einen Tropftrichter portionsweise 885,25 g N-Ethylmethallylamin (NEMALA) in der Form hinzugegeben, dass eine Reaktionstemperatur von 145 °C nicht überschritten wurde. Die Reaktion wurde bei 130°C binnen sieben Stunden zum einem SiH Umsatz >99% geführt, wobei die Reaktionskontrolle stündlich mittels einer gasvolumetrischen Bestimmung erfolgte. Das so erhaltene Reaktionsgemisch wurde auf Raumtemperatur abgekühlt, über Nacht filtriert wobei 881,50 g (Theorie 885,25 g) erhalten wurden. Die nachfolgende mehrstündige Destillation im Ölpumpenvakuum bei 130 °C und < 1mbar lieferte 403,5 g (Theorie 406,24 g) Produkt, wobei unter Flüssigstickstoffkühlung 474 g (Theorie 478,96 g) flüchtige Verbindungen auskondensiert werden konnten. Das aminofunktionelle cyclische Siloxan konnte als klare, leicht gelbliche Flüssigkeit erhalten werden. Die Untersuchung mittels ¹H-, ¹³C- und ²⁹Si-NMR bestätigte die Zielstruktur.

S30 (G16): Herstellung eines Guanidins durch Umsetzung des Syntheseproduktes S29 In einem 500 ml Vierhalskolben, ausgestattet mit KPG-Rührer, Destillationsbrücke mit Vakuumvorstoß, Stickstoffabdeckung, Temperaturfühler und Heizhaube wurden unter inerten Bedingungen 203,12 g (500 mmol/-NH-) des aminofunktionellen Siloxans aus der Vorstufe S29 und 59,95 g (475 mmol) *N*,*N*-Diisopropylcarbodiimid vorgelegt und bei 90 °C für 10 Stunden miteinander zur Reaktion gebracht. Nach vollendeter Reaktionszeit wurden bei 100°C und 20 mbar im Membranpumpenvakuum sämtliche flüchtigen Bestandteile binnen einer weiteren Stunde abdestilliert. Die Untersuchung mittels ²⁹Si- und ¹³C- NMR bestätigte die Zielstruktur des klaren, leicht gelblichen Produktes.

### Beispiel 2: Zusammensetzungen / Formulierungen

In den folgenden Zusammensetzungen beziehen sich die Mengenangaben "Teile" auf Massenteile beliebiger einheitlicher Einheit, die sich nicht zu 100 addieren.

### Zusammensetzung Z1:

25,9 Teile eines Alkoxysilylgruppen tragenden Polymers wurden mit 18,1 - 18,6 Teilen Diisoundecylphthalat, 50,5 Teilen einer gefällten Kreide (Socal® U1S2, Solvay) und 0,5 Teilen des Pigmentes Titandioxid (Kronos® 2310, Kronos) vermischt und mit Hilfe eines Speedmixers (Speedmixer® FVS 600, Hausschild) homogenisiert (2300 U/min, 4 min.). Danach wurde das Gemisch auf ca. 30 °C abgekühlt und es wurden 1,4 Teile Haftvermittler (Dynasylan® AMMO, Evonik), 1,1 Teile Trocknungsmittel (Dynasylan® VTMO, Evonik), 1,5 Teile Antioxidans-Stabilisator-Gemisches (Verhältnis Irganox® 1135:Tinuvin® 1130:Tinuvin® 292 = Verhältnis 1:2:2) und 0,5 - 2,0 Teile des Härtungskatalysators zugesetzt. Die Mischung wurde erneut mit einem Speedmixer homogenisiert (2300 U/min, 1 min).

### Zusammensetzung Z2:

25,9 Teile eines Alkoxysilylgruppen tragenden Polymers wurden mit 20,1 Teilen Diisoundecylphthalat, 50,5 Teilen einer gefällten Kreide (Socal® U1S2, Solvay), 0,5 Teilen Titandioxid (Kronos® 2310, Kronos) vermischt und mit Hilfe eines Speedmixers (Speedmixer® FVS 600, Hausschild) homogenisiert (2300 U/min, 4 min.). Danach wurde das Gemisch auf ca. 30 °C abgekühlt und es wurden 1,4 Teile Haftvermittler (Dynasylan® AMMO, Evonik), 1,1 Teile Trocknungsmittel (Dynasylan® VTMO, Evonik) und 0,5 Teile des Härtungskatalysators zugesetzt. Die Mischung wurde erneut mit einem Speedmixer homogenisiert (2300 U/min, 1 min).

### Zusammensetzung Z3:

25,9 Teile eines Alkoxysilylgruppen tragenden Polymers wurden mit 17,1 - 18,1 Teilen Weichmacher (Diisoundecylphthalat) und 50,5 Teilen einer gefällten Kreide als Füllstoff (Socal® U1S2, Solvay) vermischt und mit Hilfe eines Speedmixers (Speedmixer® FVS 600, Hausschild) homogenisiert (2300 U/min, 4 min.). Danach wurde das Gemisch auf ca. 30 °C abgekühlt und es wurden 1,4 Teile Haftvermittler (Dynasylan® AMMO, Evonik), 1,1 Teile Trocknungsmittel (Dynasylan® VTMO, Evonik), 1,5 Teile Antioxidans-Stabilisator-Gemische (Verhältnis Irganox® 1135:Tinuvin® 1130:Tinuvin® 292 = Verhältnis 1:2:2) und 0,5 - 2,0 Teile des Härtungskatalysators zugesetzt. Die Mischung wurde erneut mit einem Speedmixer homogenisiert (2300 U/min, 1 min).

### Zusammensetzung Z4:

36,1 Teile eines Alkoxysilylgruppen tragende Alkoxylierungsprodukte wurden mit 11,0 Teilen Diisoundecylphthalat, 44,8 Teilen einer gefällten Kreide (Socal® U1S2, Solvay), 3,5 Gew.-% Silica (Aerosil® R 974, Evonik) und 0,4 Teilen Titandioxid (Kronos® 2310, Kronos) vermischt und mit Hilfe eines Speedmixers (Speedmixer® FVS 600, Hausschild) homogenisiert (2300 U/min, 4 min.). Danach wurde das Gemisch auf ca. 30 °C abgekühlt und es wurden 1,7 Teile Haftvermittler (Dynasylan® 1146, Evonik), 1,5 Teile Trocknungsmittel (Dynasylan® VTMO, Evonik), 0,5 Teile Irganox® 1135 und 0,5 Teile des Härtungskatalysators zugesetzt. Die Mischung wurde erneut mit einem Speedmixer homogenisiert (2300 U/min, 1 min).

### Zusammensetzung Z5:

36,8 Teile eines Alkoxysilylgruppen tragenden Polymers wurden mit 44,2 Teilen einer gefällten Kreide (Socal® U1S2, Solvay), 11 Teilen eines Rheologiadditives (Vestinol 9 (DINP), Evonik), 0,4 Teilen Titandioxid (Kronos® 2310, Kronos) und 3,5 Teilen eines Rheologie-Additives (Aerosil R202®) vermischt und mit Hilfe eines Speedmixers (Speedmixer® FVS 600, Hausschild) homogenisiert (2300 U/min, 4 min.). Danach wurde das Gemisch auf ca. 30 °C abgekühlt und es wurden 1,0 Teile Trocknungsmittel (Dynasylan® VTMO, Evonik), 1,7 Teile Haftvermittler (Dynasylan® AMMO, Evonik), 0,5 Teile Stabilisator (Irganox® 1135, BASF) und 0,5 - 2,0 Teile des Härtungskatalysators zugesetzt. Die Mischung wurde erneut mit einem Speedmixer homogenisiert (2300 U/min, 1 min).

**Tabelle 1: Zusammensetzungen (erfindungsgemäß Z1.1 bis Z1.8, Z2.1), (nichterfindungsgemäß Z1.10, Z1.11) enthaltend ein seitenständig Alkoxysilylgruppen tragendes Polyoxypropylen (TP-2)**

| Zusammensetzung | Katalysator | Kat.-Menge [Teile] |
|---|---|---|
| Z1.1 | S25 | 1,0 |
| Z1.2 | S25 | 2,0 |
| Z1.3 | S26 | 1,0 |
| Z1.4 | S26 | 2,0 |
| Z1.5 | S27 | 1,0 |
| Z1.6 | S27 | 2,0 |
| Z1.7 | S17 | 0,5 |
| Z1.8 | S17 | 1,0 |
| Z2.1 | S17 | 0,5 |
| Z1.10 | TIB KAT 223 | 1,0 |
| Z1.11 | TIB KAT 223 | 0,5 |

**Tabelle 2: Zusammensetzungen (erfindungsgemäß Z5.1, Z5.2, Z6.1), (nicht erfindungsgemäß Z5.10, Z6.10) enthaltend ein seitenständig Alkoxysilylgruppen tragendes Polyoxypropylen (TP-1)**

| Zusammensetzung | Katalysator | Kat.-Menge [Teile] |
|---|---|---|
| Z1.12 | S18 | 1,0 |
| Z1.13 | S18 | 2,0 |
| Z5.1 | S18 | 1,0 |
| Z1.14 | TIB KAT 223 | 1,0 |
| Z5.10 | TIB KAT 223 | 1,0 |

**Tabelle 3: Zusammensetzungen enthaltend unterschiedliche Alkoxysilylgruppen tragende Polymere und den Katalysator nach Beispiel 1 in einer Menge von einem Teil (1 Teil) nach Beispiel 2**

| Zusammensetzung | Polymer | Kat. |
|---|---|---|
| Z5.2 | TP-1 | S28 |
| Z5.3 | Polymer ST 61 | S28 |
| Z5.4 | Desmoseal S XP 26935 | S28 |

### Beispiel 3: Verwendung

Alle fertigen Formulierungen wurden in PE-Kartuschen überführt und vor der Applikation mindestens 24h bei Raumtemperatur gelagert.

### Bestimmung von Bruchspannung und Bruchdehnung:

Die Formulierung wurde mit einer Schichtdicke von 2 mm auf einer PE-Oberfläche aufgerakelt. Die Filme wurden 7 Tage bei 23 °C und 50 % relativer Luftfeuchte gelagert. Anschließend wurden aus den Filmen mit Hilfe einer Schneidform und einer Kniehebelpresse S2-Schulterstäbe ausgestanzt.

Die so hergestellten Schulterstäbe wurden zur Prüfung in eine Universalprüfmaschine (Fa. Shimadzu) eingespannt, und es wurden die Bruchspannung und die Bruchdehnung beim Dehnen der Probekörper mit konstanter Geschwindigkeit (200 mm/min) ermittelt. Diese Bestimmung erfolgte in Anlehnung an DIN 53504.

### Bestimmung der Zugscherfestigkeit:

Mit der angefertigten Formulierung wurden Überlappungsverklebungen erstellt. Hierbei wurden zwei Edelstahl Substrate (V2A, 1.4301) eingesetzt. Der Bereich der Überlappungsverklebung betrug 500 mm². Die Aushärtung der Verklebungen erfolgte bei 23°C und 50% relativer Luftfeuchte. Nach 21 Tagen wurden die Verklebungen in eine Universalprüfmaschine (Fa. Shimadzu) eingespannt, und es wurde mit konstanter Geschwindigkeit (10 mm/min) eine Kraft auf die Verklebung ausgeübt, bis ein Bruch der Verklebung eintrat. Diese Bestimmung erfolgte in Anlehnung an DIN EN 1465.

### Bestimmung der Durchhärtungsgeschwindigkeit:

Methode 1: Ein Kleb- bzw. Dichtstoffstrang wurde auf eine PE-Oberfläche appliziert (Höhe: 10mm, Breite: 20mm). Nach 24h Lagerung bei 23 °C und 50% relativer Luftfeuchte wurde ein Stück aus dem Strang herausgeschnitten und die Dicke der ausgehärteten Schicht wird mit einer Schieblehre gemessen.

Methode 2: Die Härtungsgeschwindigkeit wurde mit Hilfe eines aus einem Teflonblock gefertigten Keilrakels ermittelt. Der in den Block gefräste Keil wird mit der härtbaren Zusammensetzung gefüllt und auf das Niveau der Blockkanten abgeglättet. Somit entsteht eine Schichtdickenverteilung über die Blocklänge der härtbaren Zusammensetzung von 0-10 mm. Der gefüllte Keil wird bei 23°C und 50% relativer Luftfeuchte gelagert. Zum Zeitpunkt der Bestimmung der gehärteten Schicht wird vom dünnen Ende des Keils beginnend die gehärtete Masse abgehoben und die Dicke der gehärteten Schicht bestimmt. Als gehärtet gilt die Dicke der Schicht, die einen direkten mechanischen Zusammenhalt mit der gehärteten Oberfläche besitzt, ohne noch flüssige oder gallertartige Anteilen zu beinhalten.

**Tabelle 4: Bestimmung der Durchhärtungsgeschwindigkeit, Bruchspannung, Bruchdehnung und Zugscherfestigkeit nach Beispiel 3 von Zusammensetzungen nach Beispiel 2 enthaltend unterschiedliche Katalysatoren nach Tabelle 1**

| | Durchhärtung Methode 1 nach 24h [mm] | Bruchspannung [N/mm²] | Bruchdehnung [%] | Zugscherfestigkeit [N/mm²] |
|---|---|---|---|---|
| Z1.1 | 2,6 | 1,3 | 250 | 0,53 |
| Z1.2 | 1,8 | 1,4 | 232 | 0,52 |
| Z1.3 | 2,4 | 0,9 | 305 | 0,50 |
| Z1.4 | 2,7 | 1,2 | 306 | 0,53 |
| Z1.5 | 2,6 | 1,3 | 255 | 0,46 |
| Z1.6 | 2,4 | 1,3 | 237 | 0,46 |
| Z1.7 | 2,0 | 1,4 | 293 | 0,90 |
| Z1.8 | 2,6 | 1,4 | 285 | 0,81 |
| Z2.1 | 2,0 | 2,0 | 250 | 1,08 |
| Z1.10 | 2,4 | 1,3 | 271 | 0,50 |
| Z1.11 | 2,4 | 1,6 | 262 | 0,86 |

Die in Tabelle 4 gezeigten Egebnisse zeigen, dass durch den Einsatz von Guanidingruppen aufweisenden Siloxanen in den Kleb- und Dichtstoff-Formulierungen gute Durchhärtungsergebnisse sowie gute mechanische Eigenschaften erreicht werden. Die erreichten Eigenschaften sind vergleichbar oder besser als die der Zusammensetzungen enthaltend Zinnkatalysatoren.

**Tabelle 5: Bestimmung der Durchhärtungsgeschwindigkeit, Bruchspannung und Bruchdehnung nach Beispiel 3 von Zusammensetzungen nach Beispiel 2 enthaltend den Katalysator S18 in Dosierungen nach Tabelle 2**

| | Durchhärtung Methode 2 nach 5 Tagen [mm] | Bruchspannung [N/mm²] | Bruchdehnung [%] |
|---|---|---|---|
| Z1.12 | 7 | | |
| Z1.13 | 7,3 | 1,24 | 209,1 |
| Z5.1 | 6 | | |
| Z1.14 | 2,4 | | |
| Z5.10 | 2,4 | | |

**Tabelle 6:**

| | Durchhärtung Methode 2 nach 24 h [mm] | Durchhärtung Methode 2 nach 7 Tagen [mm] | Bruchspannung [N/mm²] | Bruchdehnung [%] |
|---|---|---|---|---|
| Z5.2 | 4 | 7 | 2,33 | 120,6 |
| Z5.3 | 4 | 19 | 2,49 | 185,4 |
| Z5.4 | 3 | 12 | 0,53 | 77,4 |

### TP-1: Härtbares Polymer

Herstellung wie in EP 2 415 797 (US 2012/0029090) und Alkoxylierung gemäß EP 2 093 244 (US 2010/0041910) nach folgender Rezeptur:
Herstellung von Alkoxysilylgruppen tragenden Alkoxylierungsprodukten mit Hilfe von DMC-Katalysatoren gemäß dem in EP 2 093 244 offenbarten Verfahren. Der Epoxidsauerstoffgehalt der Endprodukte wurde in Gegenwart von HCl conc. nach dem Prinzip der Rücktitration mit Natronlauge bestimmt.
In einem 5 Liter Autoklaven werden 1412 g Polypropylenglykol (mittlere Molmasse 8000 g/mol) und 0,38 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Eine kleine Menge Propylenoxid wird zur Aktivierung des DMC-Katalysators addiert und nach 15 min und Anspringen der Reaktion werden weitere 706 g Propylenoxid bei 130 °C unter Kühlen innerhalb von 50 Minuten zugespeist. Anschließend werden gleichzeitig 123 g 3-Glycidyloxypropyltriethoxysilan (DYNASYLAN® GLYEO) sowie 760 g Propylenoxid kontinuierlich und unter Kühlen innerhalb von 1,5 h bei 100 °C zudosiert. An die 90 minütige Nachreaktion bei 100 °C schließt sich die Entgasungsstufe an. Das fertige Alkoxylierungsprodukt wird auf unter 80 °C abgekühlt und aus dem Reaktor abgelassen.

Das erhaltene Alkoxylierungsprodukt enthält im Mittel pro Molekül 2,5 Trialkoxysilyleinheiten und hat eine mittlere Molmasse von 17000 g/mol. Freie Epoxidgruppen sind im Endprodukt nicht nachweisbar. Die Viskosität des Alkoxylierungsprodukts, bestimmt mit einem kalibrierten Rheometer, beträgt bei 25°C und einer Scherrate von 10 1/s ca. 13-17 Pa*s.

### TP-2: Härtbares Polymer

Analog wie TP-1 mit folgenden Änderungen: Der Startalkohol wies eine mittlere Molmasse Mn 2000 g/mol auf und wurde in gleicher Menge im gleichen Reaktor eingesetzt. Nach der Aktivierung des Katalysators erfolgte eine Dosierung von einem equimolaren Gemisch aus Ethylen- und Propylenoxid bei 130°C bis zu einem Molmassenaufbau von 8000 g/mol, gefolgt von einer Dosierung von Propylenoxid welches 5 mol-% 3-Glycidyloxypropyltriethoxysilan (DYNASYLAN® GLYEO) enthielt. Der Polyether wies eine mittlere Molmasse von 15000 g/mol und im Mittel 4 Trialkoxysilyleinheiten auf. Nachfolgend wurde der Polyether mit equimolaren Mengen (bezogen auf die theoretische Funktionalität und die oben angegebenen Dosierungsmengen des Polyethers) Isophorondiisocyanat unter Zusatz von 60 ppm Dioctylzinndilaurat bei 80°C umgesetzt. Nach einer halben Stunde wurde die Reaktion durch Zugabe eines mono-hydroxyfunktionellen Polyethers (Butanol gestartetes PPG, Mn 400 g/mol) gestoppt. Die Mischung wurde bei 80°C eine weitere Stunde gerührt.

Das Produkt weist eine Viskosität von 45000 mPas auf und ist farblos und klar.

## Patentansprüche

1. Verwendung Guanidingruppen aufweisender semi-organische Siliciumgruppen enthaltender Verbindungen der Formel (I)
MₐM^{G}_{b}D_{c}D^{G}_{d}TₑQ_{f} (I)
a = größer 1 bis kleiner 3,
b = 0 bis 10,
c = 0 bis 350,
d = 1 bis 4,
e = 0 bis 50,
f = 0 bis 10,
wobei die Summe der Indices b und d gleich oder größer 1 bis 20 ist,
unter der Maßgabe, dass für den Index a gleich 2 und gleichzeitig die Summe der Indices von b, c, e und f gleich null, dann der Index d ungleich 1 ist,
M = [R₃SiO_{1/2}]
M^{G} = [R^{G}R₂SiO_{1/2}],
D = [R₂SiO_{2/2}],
D^{G} = [R^{G}RSiO_{2/2}],
T = [RSiO_{3/2}],
Q = [SiO_{4/2}],
R sind unabhängig voneinander, gleich oder verschieden, lineare oder verzweigte, gesättigte wie auch ein oder mehrfach ungesättigte Kohlenwasserstoffreste, die durch Heteroatome unterbrochen sein können und/oder mit Hydroxy-, Amino-, Carboxy- oder Arylresten ein oder mehrfach substituiert sein können, bevorzugt mit Aminoresten substituiert,
R^{G} ein Guanidingruppen haltiger Rest der Formel (IIa), (IIb) oder (IIc),deren Tautomere und/oder Salze 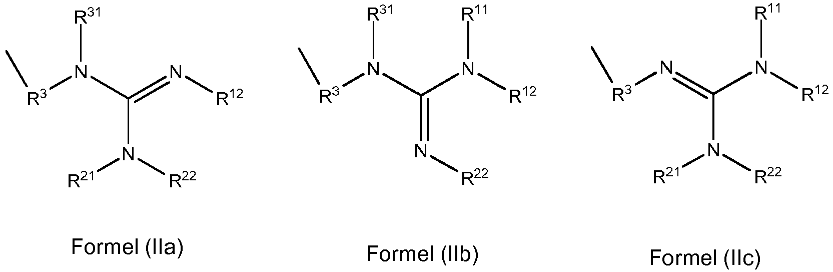
R³ sind zweiwertige Reste, die unabhängig voneinander, gleiche oder verschiedene lineare oder verzweigte Kohlenwasserstoffreste enthaltend 1 bis 50 Kohlenstoffatome, die durch Heteroatome unterbrochen sein können, bevorzugte Heteroatome sind Sauerstoff, Stickstoff oder Schwefel und/oder mit Hydroxy- oder Aminoresten ein oder mehrfach substituiert sein können,
R¹¹, R¹², R²¹, R²², R³¹ sind unabhängig voneinander gleich oder verschieden Wasserstoff, lineare oder verzweigte oder cyclische Kohlenwasserstoffe enthaltend 1 bis 15 Kohlenstoffatome, wobei die Kohlenwasserstoffe auch 1 oder 2 Heteroatome enthalten können, bevorzugte Heteroatome sind Stickstoff, Sauerstoff und Silizium,
zur Härtung von alkoxysilylgruppenhaltigen Verbindungen.

2. Verwendung nach Anspruch 1 **dadurch gekennzeichnet, dass** der Index d größer 1 bis kleiner 4 ist.

3. Verwendung gemäß Anspruch 1 oder 2, **dadurch gekennzeichnet, dass** die Alkoxysilylgruppen haltigen Verbindungen Polymere der Formel (III) sind
P(SiX_{w}Y_{(3-w)})ₚ (III)
wobei
P ein beliebiges Polymer sein kann,
X ist gleich einem Alkoxyrest mit 1 bis 8 Kohlenstoffatomen,
Y ein Alkylrest,
w ein Index von 1 bis 3,
p gleich 1 bis 100 ist.

4. Verfahren zur Härtung von alkoxysilylgruppenhaltigen Verbindungen unter Bildung von Si-O-Si-Bindungen **dadurch gekennzeichnet, dass** mindestens eine Guanidingruppen aufweisende semi-organische Siliciumgruppen enthaltende Verbindung nach einem der Ansprüche 1 oder 2 verwendet wird.

5. Verfahren nach Anspruch 4, **dadurch gekennzeichnet, dass** die Härtung von alkoxysilylgruppenhaltigen Verbindungen bei Raumtemperatur durchgeführt wird.

6. Verfahren gemäß Anspruch 5, dadurch charakterisiert, dass zur Härtung keine Metallkatalysatoren zugesetzt werden.

## Claims

1. Use of compounds having guanidine groups and containing semi-organic silicon groups, of the formula (I)
MₐM^{G}_{b}D_{c}D^{G}_{d}TₑQ_{f} (I)
a = greater than 1 to less than 3,
b = 0 to 10,
c = 0 to 350,
d = 1 to 4,
e = 0 to 50,
f = 0 to 10,
where the sum of the indices b and d is greater than or equal to 1 to 20,
with the proviso that when the index a is 2 and at the same time the sum of the indices b, c, e and f is zero, the index d is other than 1,
M = [R₃SiO_{1/2}]
M^{G} = [RGR ₂SiO_{1/2}],
D = [R₂SiO_{2/2}],
D^{G} = [R^{G}RSiO_{2/2}],
T = [RSiO_{3/2}],
Q = [SiO_{4/2}],
R are, independently of one another, identical or different, linear or branched, saturated or else
mono- or polyunsaturated hydrocarbon radicals, which may be interrupted by heteroatoms and/or may be substituted one or more times by hydroxyl, amino, carboxyl or aryl radicals, preferably being substituted by amino radicals,
R^{G} is a radical containing guanidine groups and of the formula (IIa), (IIb) or (IIc), the tautomers and/or salts thereof, 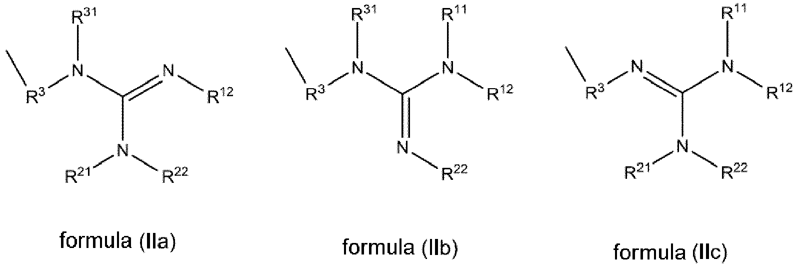
R³ are divalent radicals which, independently of one another, are identical or different, linear or branched hydrocarbon radicals containing 1 to 50 carbon atoms, and may be interrupted by heteroatoms, preferred heteroatoms being oxygen, nitrogen or sulphur, and/or which may be substituted one or more times by hydroxyl or amino radicals,
R¹¹, R¹², R²¹, R²² and R³¹ are, independently of one another, identical or different and are hydrogen, linear or branched or cyclic hydrocarbons containing 1 to 15 carbon atoms, it being possible for the hydrocarbons also to contain 1 or 2 heteroatoms, preferred heteroatoms being nitrogen, oxygen and silicon, for curing compounds containing alkoxysilyl groups.

2. Use according to Claim 1, **characterized in that** the index d is greater than 1 to less than 4.

3. Use according to Claim 1 or 2, **characterized in that** the compounds containing alkoxysilyl groups are polymers of the formula (III)
P(SiX_{w}Y_{(3-w)})ₚ (III)
where
P may be any desired polymer,
X is an alkoxy radical having 1 to 8 carbon atoms,
Y is an alkyl radical,
w is an index from 1 to 3,
p is 1 to 100.

4. Method for curing compounds containing alkoxysilyl groups, to form Si-O-Si bonds, **characterized in that** at least one compound having guanidine groups and containing semi-organic silicon groups according to any of Claims 1 and 2 is used.

5. Method according to Claim 4, **characterized in that** the curing of compounds containing alkoxysilyl groups is carried out at room temperature.

6. Method according to Claim 5, **characterized in that**, for the curing, no metal catalysts are added.

## Revendications

1. Utilisation de composés de formule (I) contenant des groupes silicium semi-organiques comprenant des groupes guanidine
MₐM^{G}_{b}D_{c}D^{G}_{d}TₑQ_{f} (I)
avec
a = plus de 1 à moins de 3,
b = 0 à 10,
c = 0 à 350,
d = 1 à 4,
e = 0 à 50,
f = 0 à 10,
la somme des indices b et d étant supérieure ou égale à 1 à 20,
à condition que lorsque l'indice a vaut 2 et que simultanément la somme des indices b, c, e et f vaut zéro, alors l'indice d soit différent de 1,
M = [R₃SiO_{1/2}],
M^{G} = [R^{G}R₂SiO_{1/2}],
D = [R₂SiO_{2/2}],
D^{G} = [R^{G}RSiO_{2/2}],
T = [RSiO_{3/2}],
Q = [SiO_{4/2}],
les R représentent indépendamment les uns des autres, de manière identique ou différente, des radicaux hydrocarbonés linéaires ou ramifiés, saturés ou mono- ou polyinsaturés, qui peuvent être interrompus par des hétéroatomes et/ou qui peuvent être substitués une ou plusieurs fois avec des radicaux hydroxy, amino, carboxy ou aryle, de préférence avec des radicaux amino,
R^{G} représente un radical contenant des groupes guanidine de formule (IIa), (IIb) ou (IIc), leurs tautomères et/ou sels 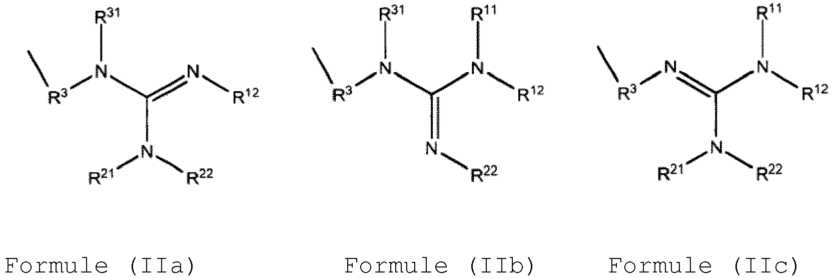
les R³ représentent des radicaux bivalents, qui sont indépendamment les uns des autres des radicaux hydrocarbonés linéaires ou ramifiés identiques ou différents, contenant 1 à 50 atomes de carbone, qui peuvent être interrompus par des hétéroatomes, des hétéroatomes préférés étant l'oxygène, l'azote ou le soufre, et/ou qui peuvent être substitués une ou plusieurs fois avec des radicaux hydroxy ou amino,
R¹¹, R¹², R²¹, R²², R³¹ représentent indépendamment les uns des autres, de manière identique ou différente, l'hydrogène, des hydrocarbures linéaires ou ramifiés ou cycliques contenant 1 à 15 atomes de carbone, les hydrocarbures pouvant également contenir 1 ou 2 hétéroatomes, des hétéroatomes préférés étant l'azote, l'oxygène et le silicium,
pour le durcissement de composés contenant des groupes alcoxysilyle.

2. Utilisation selon la revendication 1, **caractérisée en ce que** l'indice d est de plus de 1 à moins de 4.

3. Utilisation selon la revendication 1 ou 2, **caractérisée en ce que** les composés contenant des groupes alcoxysilyle sont des polymères de formule (III)
P(SiX_{w}Y_{(3-w)})ₚ (III)
dans laquelle
P peut être un polymère quelconque,
X représente un radical alcoxy de 1 à 8 atomes de carbone,
Y représente un radical alkyle,
w représente un indice de 1 à 3,
p représente 1 à 100.

4. Procédé de durcissement de composés contenant des groupes alcoxysilyle avec formation de liaisons Si-O-Si, **caractérisé en ce qu'**au moins un composé contenant des groupes silicium semi-organiques comprenant des groupes guanidine selon l'une quelconque des revendications 1 ou 2 est utilisé.

5. Procédé selon la revendication 4, **caractérisé en ce que** le durcissement de composés contenant des groupes alcoxysilyle est réalisé à température ambiante.

6. Procédé selon la revendication 5, **caractérisé en ce qu'**aucun catalyseur métallique n'est ajouté pour le durcissement.
